(19) Europäisches Patentamt
European Patent Office
Office européen des brevets

(11) **EP 1 640 597 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(51) Int Cl.:
*F02M 25/07* (2006.01)      *F02B 37/013* (2006.01)
*F02B 37/007* (2006.01)

(21) Anmeldenummer: **04104587.3**

(22) Anmeldetag: **22.09.2004**

(54) **Aufgeladene Brennkraftmaschine und Verfahren zum Betreiben einer derartigen Brennkraftmaschine**

Supercharged internal combustion engine and method for operating such an internal combustion engine

Moteur à combustion interne à suralimentation et procédé pour faire fonctionnner un tel moteur à combustion interne

(84) Benannte Vertragsstaaten:
**DE FR GB**

(43) Veröffentlichungstag der Anmeldung:
**29.03.2006 Patentblatt 2006/13**

(73) Patentinhaber: **Ford Global Technologies, LLC Dearborn, MI 48126 (US)**

(72) Erfinder:
• **Schorn, Norbert**
**52080, Aachen (DE)**
• **Kindl, Matthias**
**52066, Aachen (DE)**
• **Spaeder, Uwe**
**52066, Aachen (DE)**
• **Stalman, Rob**
**52538, Selfkant (DE)**

(74) Vertreter: **Dörfler, Thomas**
**Ford-Werke Aktiengesellschaft**
**Abt. NH-364**
**Henry-Ford-Strasse 1**
**50735 Köln (DE)**

(56) Entgegenhaltungen:
EP-A- 0 404 073          EP-A- 1 221 546
EP-A- 1 275 832          EP-A- 1 302 646
EP-A- 1 396 619          EP-A- 1 400 667
US-A- 6 079 211          US-A1- 2002 116 926
US-B1- 6 360 732

• PATENT ABSTRACTS OF JAPAN Bd. 1995, Nr. 01, 28. Februar 1995 (1995-02-28) & JP 06 280585 A (JIDOSHA KIKI CO LTD), 4. Oktober 1994 (1994-10-04)
• PATENT ABSTRACTS OF JAPAN Bd. 017, Nr. 379 (M-1447), 16. Juli 1993 (1993-07-16) & JP 05 065830 A (ISUZU CERAMICS KENKYUSHO:KK), 19. März 1993 (1993-03-19)
• PATENT ABSTRACTS OF JAPAN Bd. 014, Nr. 307 (M-0993), 3. Juli 1990 (1990-07-03) & JP 02 099723 A (TOYOTA MOTOR CORP), 11. April 1990 (1990-04-11)

**Beschreibung**

Die Erfindung betrifft eine aufgeladene Brennkraftmaschine mit mindestens zwei Zylindern, die in der Art konfiguriert sind, daß sie zwei Gruppen mit jeweils mindestens einem Zylinder bilden, wobei beide Zylindergruppen jeweils mit einer Abgasleitung ausgestattet sind und beide Abgasleitungen miteinander in Verbindung stehen, und mit zwei Abgasturboladern, deren Turbinen parallel geschaltet sind, indem eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist, und deren Verdichter in Reihe geschaltet sind, indem ein erster Verdichter des ersten Abgasturboladers in einer Gesamtansaugleitung, die zur Versorgung der Brennkraftmaschine mit Frischluft bzw. Frischgemisch dient, angeordnet ist und ein zweiter Verdichter des zweiten Abgasturboladers stromabwärts des ersten Verdichters in dieser Gesamtansaugleitung angeordnet ist, und mit einer Abgasrückführung, welche eine Leitung umfaßt, die stromaufwärts einer der beiden Turbinen aus der dieser Turbine zugeordneten Abgasleitung abzweigt und in die Gesamtansaugleitung mündet.

Des weiteren betrifft die Erfindung ein Verfahren zum Betreiben einer aufgeladenen Brennkraftmaschine der oben genannten Art.

Im Rahmen der vorliegenden Erfindung umfaßt der Begriff Brennkraftmaschine sowohl Dieselmotoren als auch Ottomotoren.

In den letzten Jahren hat sich eine Entwicklung hin zu kleinen, hochaufgeladenen Motoren vollzogen, wobei die Aufladung in erster Linie ein Verfahren zur Leistungssteigerung ist, bei dem die für den motorischen Verbrennungsprozeß benötigte Luft verdichtet wird. Die wirtschaftliche Bedeutung dieser Motoren für die Automobilbauindustrie nimmt weiter ständig zu.

In der Regel wird für die Aufladung ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Vorteile des Abgasturboladers beispielsweise im Vergleich zu mechanischen Ladern besteht darin, daß keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Ein typischer Vertreter der kleinen, hochaufgeladenen Motoren ist eine Brennkraftmaschine mit Abgasturboaufladung, bei der die Abgasenergie zur Verdichtung der Verbrennungsluft eingesetzt wird, und die zusätzlich über eine Ladeluftkühlung verfügt, mit der die komprimierte Verbrennungsluft vor Eintritt in den Brennraum runtergekühlt wird.

Wie oben bereits ausgeführt, hat in den letzten Jahren der Einsatz von Abgasturboladern stark zugenommen, wobei ein Ende dieser Entwicklung nicht abzusehen ist. Die Gründe hierfür sind vielschichtig und werden im folgenden kurz dargelegt.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck $p_{me}$ gesteigert werden.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, den Kraftstoffverbrauch zu minimieren, d.h. den Wirkungsgrad der Brennkraftmaschine zu verbessern.

Ein weiteres grundsätzliches Ziel ist es, die Schadstoffemissionen zu reduzieren. Bei der Lösung dieser Aufgabe kann die Aufladung der Brennkraftmaschine ebenfalls zielführend sein. Bei gezielter Auslegung der Aufladung können nämlich Vorteile im Wirkungsgrad und bei den Abgasemissionen erzielt werden. So können mittels geeigneter Aufladung beispielsweise beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch ebenfalls ab. Die Aufladung eignet sich daher ebenfalls zur Reduzierung der Schadstoffemissionen. Um die zukünftigen Grenzwerte für Schadstoffemissionen einzuhalten, sind aber darüber hinaus weitere Maßnahmen erforderlich, auf die weiter unten noch im Detail eingegangen werden wird, da ihnen im Rahmen der vorliegenden Erfindung eine wesentliche Rolle zukommt. Zunächst sollen aber die grundsätzlichen Probleme bei der Auslegung des Abgasturboladers aufgezeigt werden, die bei sämtlichen anderen Maßnahmen mit in Betracht zu ziehen sind.

Schwierigkeiten bereitet die Auslegung des Abgasturboladers, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Dieser Effekt ist unerwünscht, da der Fahrer im Vergleich mit einem nicht aufgeladenen Motor gleicher Maximalleistung auch im unteren Drehzahlbereich ein entsprechend großes Drehmoment erwartet. Das sogenannte Turboloch bei niedrigen Drehzahlen zählt daher auch zu den gravierendsten Nachteilen der Abgasturboaufladung.

Verständlich wird dieser Drehmomentabfall, wenn berücksichtigt wird, daß das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, daß zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis führen die beschriebenen Zusammenhänge häufig dazu, daß ein möglichst kleiner Abgasturbolader d.h. ein Abgasturbolader mit einem möglichst kleinen Turbinenquerschnitt eingesetzt wird. Letztendlich wird damit dem Drehmomentabfall nur in geringem Maße entgegengewirkt und der Drehmomentabfall weiter zu geringeren Drehzahlen hin verschoben. Zudem sind dieser Vorgehensweise d. h. der Verkleinerung des Turbinenquerschnittes Grenzen gesetzt, da die gewünschte Aufladung und Leistungssteigerung auch bei hohen Drehzahlen uneingeschränkt und in dem gewünschten Maße möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung, wobei die Abgasabblasung mittels Ladedruck oder mittels Abgasdruck gesteuert werden kann. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat aber - wie bereits oben angesprochen - den Nachteil, daß das Aufladeverhalten bei höheren Drehzahlen unzureichend ist.

Grundsätzlich ist auch eine kleine Auslegung des Turbinenquerschnittes zusammen mit einer Ladeluftabblasung möglich, wobei diese Variante aufgrund der energetischen Nachteile der Ladeluftabblasung d.h. der Verschlechterung des effektiven Wirkungsgrades selten zum Einsatz kommt, und die vorhandenen Verdichter an ihre Fördergrenze geraten können und somit die gewünschte Leistung nicht mehr dargestellt werden kann.

Bei Dieselmotoren kann eine kleine Auslegung des Turbinenquerschnittes und die gleichzeitige Begrenzung des Ladedruckes durch Abregelung der Brennstoffmasse bei hohen Drehzahlen zielführend sein. Die Möglichkeiten zur Leistungssteigerung mittels Abgasturboaufladung werden dabei aber nicht voll ausgeschöpft.

Der Abgasturbolader kann aber auch auf hohe Drehzahlen abgestimmt mit einem großen Turbinenquerschnitt ausgelegt werden. Dabei wird das Saugsystem dann in der Weise gestaltet, daß durch Wellenvorgänge bei niedrigen Drehzahlen eine dynamische Aufladung erfolgt. Nachteilig ist dabei der hohe Bauaufwand und das träge Verhalten bei Drehzahländerungen.

Die Drehmomentcharakteristik einer aufgeladenen Brennkraftmaschine kann des weiteren durch eine Registeraufladung verbessert werden. Dabei werden mehrere parallel geschaltete Turbolader mit entsprechend kleinen Turbinenquerschnitten mit steigender Last zugeschaltet.

Mehrere Turbolader sind hinsichtlich der Verbesserung der Drehmomentcharakteristik auch dann zielführend, wenn sie wie bei einer Brennkraftmaschine der gattungsbildenden Art konfiguriert werden. Die Zylinder der Brennkraftmaschine werden hierzu in zwei Zylindergruppen, die jeweils mit einer Abgasleitung ausgestattet sind, aufgeteilt. Die beiden Turbinen sind parallel geschaltet, wobei die erste Turbine des ersten Abgasturboladers in der Abgasleitung der ersten Zylindergruppe und die zweite Turbine des zweiten Abgasturboladers in der Abgasleitung der zweiten Zylindergruppe angeordnet wird. Damit sind die Turbinen parallel geschaltet. Die beiden Verdichter hingegen werden in Reihe geschaltet, wobei der erste Verdichter des ersten Abgasturboladers in der Gesamtansaugleitung, die zur Versorgung der Brennkraftmaschine mit Frischluft bzw. Frischgemisch dient, angeordnet wird und der zweite Verdichter des zweiten Abgasturboladers stromabwärts des ersten Verdichters in der Gesamtansaugleitung angeordnet wird, siehe hierzu auch die US 6,360,732.

Die in dieser Weise angeordneten Abgasturbolader gestatten es, die parallel betriebenen Turbinen auf kleinere Abgasströme auszulegen und damit auf das Verdichterkennfeld in vorteilhafter Weise Einfluß zu nehmen. Das effektive Verdichterkennfeld wird aufgrund der Reihenschaltung d. h. der mehrstufigen Verdichtung aufgeweitet. Insbesondere wird ein Verschieben der Pumpgrenze zu kleineren Verdichterströmen hin möglich, wodurch auch bei kleinen Verdichterströmen hohe Ladedruckverhältnisse erzielt werden können, was im unteren Teillastbereich die Drehmomentcharakteristik deutlich verbessert.

Kleiner dimensionierte Abgasturbolader im allgemeinen und kleiner dimensionierte Verdichter bzw. Turbinen im besonderen bieten aber - wegen ihrer geringeren Masse und ihrem geringeren Massenträgheitsmoment - darüber hinaus noch weitere Vorteile.

Das Ansprechverhalten einer derartig aufgeladenen Brennkraftmaschine ist deutlich verbessert. Der Grund hierfür ist darin zu finden, daß kleinere Turbinen bzw. kleinere Verdichter weniger träge sind als größere Turbinen bzw. größere Verdichter, weil das Laufzeug sich schneller beschleunigen und verzögern läßt. Vor allem weist der zweite Abgasturbolader, dessen Verdichter aufgrund der Vorverdichtung der Verbrennungsluft kleiner ausgeführt werden kann, ein deutlich kleineres Massenträgheitsmoment auf.

Dieser Effekt hat auch hinsichtlich der Partikelemissionen Vorteile, da bei einer Beschleunigung die notwendige Zunahme der den Zylindern zugeführten Luftmasse der erhöhten Kraftstoffmenge infolge der Trägheit der Laufräder nur verzögert erfolgt.

Kleiner dimensionierte Turbinen sind des weiteren aufgrund ihrer geringeren Masse thermisch weniger träge. Der heiße Abgasstrom muß auf dem Weg zu den Abgasnachbehandlungssystemen die Turbinen durchströmen und gibt dort insbesondere während der Warmlaufphase unter Absenkung der Abgastemperatur Wärme an die Turbinen ab, so daß die Erwärmung der Turbinen mit dazu beiträgt, daß die im Abgastrakt angeordneten Katalysatoren später ihre Anspringtemperatur erreichen.

Die in Reihe geschalteten Verdichter sorgen im Rahmen einer zweistufigen Kompression für ausreichend hohe Ladedrücke, wobei der erste Verdichter die Niederdruckstufe und der zweite Verdichter die Hochdruckstufe bildet.

Wie bereits oben erwähnt sind neben der Aufladung weitere Maßnahmen erforderlich, um zukünftige Grenzwerte für Schadstoffemissionen einzuhalten. Im Mittelpunkt der Entwicklungsarbeiten steht dabei unter anderem die Reduzierung der Stickoxidemissionen, die insbesondere bei den Dieselmotoren von hoher Relevanz sind. Da die Bildung der Stickoxide nicht nur einen Luftüberschuß, sondern auch hohe Temperaturen erfordert, besteht ein Konzept zur Senkung der Stickoxidemissionen darin, Verbrennungsprozesse bzw. -verfahren mit niedrigeren Verbrennungstemperaturen zu entwickeln.

Dabei ist die Abgasrückführung d.h. die Rückführung von Verbrennungsgasen aus der Abgasleitung in die Ansaugleitung zielführend, bei der mit zunehmender Abgasrückführrate die Stickoxidemissionen deutlich gesenkt werden können. Die Abgasrückführrate $x_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und m Frischluft die zugeführte - gegebenenfalls durch einen Verdichter geführte und komprimierte - Frischluft bzw. Verbrennungsluft bezeichnet.

Die Abgasrückführung eignet sich auch zur Reduzierung der Emissionen an unverbrannten Kohlenwasserstoffen im Teillastbereich.

Um eine deutliche Senkung der Stickoxidemissionen zu erreichen, sind hohe Abgasrückführraten erforderlich, die in der Größenordnung von $X_{AGR} \approx 60\%$ bis 70% liegen können.

Dadurch ergibt sich aber ein Konflikt beim Betrieb einer Brennkraftmaschine mit Abgasturboaufladung und gleichzeitiger Verwendung einer Abgasrückführung, da das rückgeführte Abgas stromaufwärts der Turbine aus der Abgasleitung entnommen wird und zum Antrieb der Turbine nicht mehr zur Verfügung steht. Anhand einer einstufig aufgeladenen Brennkraftmaschine mit einem Abgasturbolader läßt sich dieser Konflikt leicht verdeutlichen.

Bei einer Steigerung der Abgasrückführrate nimmt gleichzeitig der verbleibende der Turbine zugeführte Abgasstrom ab. Der kleinere Abgasmassenstrom durch die Turbine führt zu einem kleineren Turbinendruckverhältnis. Mit abnehmendem Turbinendruckverhältnis nimmt das Ladedruckverhältnis ebenfalls ab, was gleichbedeutend ist mit einem kleineren Verdichtermassenstrom. Neben dem abnehmenden Ladedruck können sich zusätzliche Probleme beim Betrieb des Verdichters hinsichtlich der Pumpgrenze des Verdichters einstellen.

Die beschriebenen Effekte d.h. die Zunahme der Abgasrückführung und die dadurch hervorgerufene gleichzeitige Abnahme des Ladedrucks bzw. Verdichterstroms führen zu einer fetteren Zylinderfrischladung d. h. zu weniger Frischluft bzw. Sauerstoff im Brennraum. Dies führt zu einer erhöhten Rußbildung, insbesondere bei der Beschleunigung, denn aufgrund der Trägheit des Laufzeugs des Abgasturboladers wird - wie bereits oben erwähnt - die Brennstoffmenge häufig schneller erhöht als die den Zylindern zugeführte Frischluft.

Aus diesem Grund sind Aufladekonzepte erforderlich, die - insbesondere im Teillastbereich - ausreichend hohe Ladedrücke bei gleichzeitig hohen Abgasrückführraten sicherstellen. Der Teillastbereich ist insbesondere aufgrund der für die Bestimmung der Schadstoffemissionen vorgeschriebenen gesetzlichen Abgastests von hoher Relevanz. Grundsätzlich werden aber unter allen Betriebsbedingungen hohe Ladedrücke und hohe Abgasrückführraten angestrebt.

An dieser Stelle sei angemerkt, daß die Begriffe "niedrige Drehzahlen" und "hohe Drehzahlen" im Rahmen der vorliegenden Erfindung dahingehend zu verstehen sind, daß unter den Begriff "niedrige Drehzahlen" das gesamte Drehzahlband subsumiert wird, welches bei der Absolvierung der gesetzlich vorgeschriebenen Tests zur Bestimmung der Schadstoffemissionen durchlaufen wird.

Erschwert wird der aufgezeigte Konflikt zwischen Abgasrückführung und Aufladung dadurch, daß die Rückführung von Abgas aus der Abgasleitung in die Ansaugleitung eine Druckdifferenz d. h. ein Druckgefälle von der Abgasseite hin zur Ansaugseite erfordert. Zur Erzielung der geforderten hohen Abgasrückführraten ist darüber hinaus ein hohes Druckgefälle erforderlich. Diese Zielsetzung erfordert einen niedrigen Ladedruck bzw. einen Ladedruck, der niedriger ist als der Abgasgegendruck in der zur Abgasrückführung genutzten Abgasleitung, was der oben aufgestellten Forderung nach einem hohen Ladedruck widerspricht.

Die aufgezeigten Konflikte bei der gleichzeitigen Verwendung von Abgasturboladern und Abgasrückführsystemen können nach dem Stand der Technik nicht aufgelöst werden kann.

Vor diesem Hintergrund ist es die Aufgabe der vorliegenden Erfindung, eine aufgeladene Brennkraftmaschine gemäß dem Oberbegriff des Anspruchs 1 d.h. der gattungsbildenden Art bereitzustellen, mit der die nach dem Stand der Technik bekannten Nachteile überwunden werden und mit der insbesondere gleichzeitig hohe Abgasrückführraten und hohe Ladedrücke in sämtlichen Lastbereichen der Brennkraftmaschine realisiert werden können.

Eine weitere Teilaufgabe der vorliegenden Erfindung ist es, ein Verfahren zum Betreiben einer aufgeladenen Brennkraftmaschine der oben genannten Art aufzuzeigen.

Gelöst wird die erste Teilaufgabe durch eine aufgeladene Brennkraftmaschine mit mindestens zwei Zylindern, die in der Art konfiguriert sind, daß sie zwei Gruppen mit jeweils mindestens einem Zylinder bilden, wobei beide Zylindergruppen jeweils mit einer Abgasleitung ausgestattet sind und beide Abgasleitungen miteinander in Verbindung stehen, und mit zwei Abgasturboladern, deren Turbinen parallel geschaltet sind, indem eine erste Turbine eines ersten Abgasturboladers in der Abgasleitung der ersten Zylindergruppe angeordnet ist und eine zweite Turbine eines zweiten Abgasturboladers in der Abgasleitung der zweiten Zylindergruppe angeordnet ist, und deren Verdichter in Reihe geschaltet sind, indem ein erster Verdichter des ersten Abgasturboladers in einer Gesamtansaugleitung, die zur Versorgung der Brennkraftmaschine mit Frischluft bzw. Frischgemisch dient, angeordnet ist und ein zweiter Verdichter des zweiten Abgasturboladers stromabwärts des ersten Verdichters in dieser Gesamtansaugleitung angeordnet ist, und mit einer Abgasrückführung, welche eine Leitung umfaßt, die stromaufwärts einer der beiden Turbinen aus der dieser Turbine zugeordneten Abgasleitung abzweigt und in die Gesamtansaugleitung mündet wobei sowohl in der ersten Abgasleitung als auch in der zweiten Abgasleitung Mittel vorgesehen sind, mit denen die Größe der beiden durch die Turbinen geführten Abgasmassenströme steuerbar ist.

Die erfindungsgemäße Brennkraftmaschine ist mit zwei parallel geschalteten, in zwei Abgasleitungen angeordneten Turbinen und zwei in Reihe geschalteten, in einer gemeinsamen Ansaugleitung angeordneten Verdichtern ausgestattet.

Erfindungsgemäß sind Mittel in den beiden Abgasleitungen vorgesehen, mit denen die beiden Abgasströme, welche durch die beiden Turbinen geleitet werden, gesteuert werden können. Dadurch ergeben sich vielfältige Möglichkeiten zur Steuerung d. h. zur Aufteilung der heißen Abgase auf die beiden Turbinen. Aufgrund der Tatsache, daß beide Abgasleitungen miteinander verbunden sind, kann der gesamte Abgasstrom sowohl vollständig durch die erste Turbine als auch vollständig durch die zweite Turbine geleitet werden. Eine Aufteilung der heißen Abgase auf beide Turbinen ist grundsätzlich auch möglich, insbesondere eine asymmetrische Aufteilung, so daß eine Turbine mit einem größeren Abgasstrom und die andere Turbine mit einem kleineren Abgasstrom beaufschlagt werden kann.

Dadurch kann in sämtlichen Betriebspunkten der Brennkraftmaschine ein hoher Ladedruck und eine hohe Abgasrückführrate realisiert werden. Im Gegensatz zu herkömmlichen Aufladekonzepten muß kein Kompromiß bei der Auslegung des Abgasturboladers eingegangen werden, um in sämtlichen Drehzahlbereichen eine mehr oder weniger zufriedenstellende Aufladung zu realisieren.

Vorteilhaft sind daher Ausführungsformen, bei denen der erste Verdichter größer ausgelegt ist als der zweite Verdichter, weil bei dieser Ausgestaltung der Brennkraftmaschine der erste Verdichter im Rahmen der zweistufigen Verdichtung die Niederdruckstufe bildet, wohingegen der zweite Verdichter die bereits vorverdichtete Luft komprimiert und somit die Hochdruckstufe darstellt.

Vorteilhaft sind insbesondere Ausführungsformen der Brennkraftmaschine, bei denen die erste Turbine größer ausgelegt ist als die zweite Turbine.

Bei niedrigen Drehzahlen bzw. geringen Abgasmengen werden die in den Abgasleitungen vorgesehenen Mittel dann in der Art gesteuert, daß der wesentliche Anteil des Abgases durch die zweite, kleinere Turbine geleitet wird. Dies ermöglicht die Auslegung der zweiten Turbine auf kleine Abgasmengen bzw. kleine Abgasströme und somit eine Optimierung der Aufladung im unteren und mittleren Teillastbereich. Dabei sollte der Abgasstrom durch die erste, große Turbine vorzugsweise nie ganz unterbunden werden, da die Laufräder der Turbine mit Gleitlagern ausgestattet sind und eine gewisse Drehzahl erforderlich ist, damit der hydrodynamische Schmierölfilm des Gleitlagers aufgebaut und aufrechterhalten wird. Auf diese Weise wird unter allen Betriebsbedingungen eine Flüssigkeitsreibung im Gleitlager sichergestellt, was günstig hinsichtlich des Verschleißes und der Lebensdauer bzw. der Funktionstüchtigkeit der Turbine ist.

Wird der Abgasstrom zur Generierung hoher Ladedrücke im unteren und mittleren Teillastbereich im wesentlichen durch die kleine Turbine geführt, wird dadurch gleichzeitig ein ausreichend hoher Abgasgegendruck in den Abgasleitungen erzeugt, wodurch eine Möglichkeit zur Realisierung hoher AGR-Raten sichergestellt wird.

Bei hohen Drehzahlen bzw. großen Abgasmengen werden die in den Abgasleitungen vorgesehenen Mittel dann in der Art gesteuert, daß der wesentliche Anteil des Abgases durch die erste, größere Turbine geleitet wird. Dies ermöglicht die Auslegung der ersten Turbine auf hohe Abgasmengen bzw. große Abgasströme und somit eine Optimierung der Aufladung im oberen Teillastbereich und nahe der Vollast. Dabei sollte - aus den oben bereits genannten Gründen - der Abgasstrom durch die zweite, kleine Turbine vorzugsweise nie ganz unterbunden werden.

Ein ausreichend hoher Abgasgegendruck in den Abgasleitungen ist dabei ebenfalls gewährleistet, wodurch auch im oberen Teillastbereich und nahe der Vollast die Möglichkeit zur Realisierung hoher AGR-Raten besteht.

Dadurch, daß beide Abgasleitungen in Verbindung miteinander stehen und damit in sämtlichen Abgasleitungen derselbe Abgasgegendruck vorherrscht, muß lediglich eine Leitung zur Abgasrückführung vorgesehen werden, die stromaufwärts der Mittel zur Steuerung der Abgasströme aus einer der beiden Abgasleitungen abzweigt und in die Gesamtansaugleitung stromaufwärts der Verdichter einmündet.

Der nach dem Stand der Technik nicht aufzulösende Konflikt zwischen hoher Abgasrückführrate und hohem Ladedruck unter sämtlichen Betriebsbedingungen der Brennkraftmaschine kann auf diese Weise entflochten werden. Während unter Betriebsbedingungen mit großen Mengen an heißem Abgas vorwiegend der erste Abgasturbolader zum Einsatz kommt, besteht bei kleineren Abgasmengen die Möglichkeit, durch geeignete Steuerung der vorgesehnen Mittel den Schwerpunkt der Aufladung auf den kleineren Abgasturbolader zu verlegen und den Abgasstrom im wesentlichen über die zweite Abgasleitung der zweiten, kleineren Turbine zuzuführen.

Dadurch wird die erste der Erfindung zugrunde liegende Aufgabe gelöst, nämlich eine aufgeladene Brennkraftmaschine bereitzustellen, mit der die nach dem Stand der Technik bekannten Nachteile überwunden werden und mit der insbesondere gleichzeitig hohe Abgasrückführraten und hohe Ladedrücke in sämtlichen Lastbereichen der Brennkraftmaschine realisiert werden können.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen das Mittel zur Steuerung des Abgasmassenstroms in der ersten Abgasleitung und/oder das Mittel zur Steuerung des Abgasmassenstroms in der zweiten Abgasleitung ein Absperrelement, vorzugsweise ein Ventil, ist.

Mit Hilfe des Absperrelementes wird der Strömungsquerschnitt der ersten Abgasleitung und/oder der zweiten Abgasleitung, vorzugsweise stufenlos, verändert, wobei eine Verkleinerung des Strömungsquerschnittes der Abgasleitung zu einer Verkleinerung des Abgasmassenstromes durch die entsprechende Turbine führt. Die Vergrößerung des Strömungsquerschnittes hingegen gibt den Weg durch die entsprechende Turbine frei und erhöht den durch diese Turbine geleiteten Abgasmassenstrom. Prinzipbedingt ist das Absperrelement stromabwärts der Abzweigung der Leitung zur Abgasrückführung vorgesehen. Für eine stufenlose Verstellung der Strömungsquerschnitte eignen sich insbesondere Turbinen mit variabler Geometrie als Mittel zur Steuerung der Abgasmassenströme.

Es sind aber auch Ausführungsformen der Brennkraftmaschine für die Praxis relevant, bei denen die erste oder zweite Abgasleitung mit den Absperrelementen entweder vollständig geschlossen oder vollständig geöffnet wird. Damit läßt sich die erfindungsgemäße Brennkraftmaschine gewissermaßen zwischen zwei Konfiguration hin und her schalten. Dabei wird entweder der gesamte Abgasstrom durch die erste, große Turbine oder aber durch die zweite, kleine Turbine geleitet. Bei geeigneter Auslegung der Aufladung kann so der für die Bestimmung der Schadstoffemissionen gesetzlich vorgeschriebene Test ohne Umschalten absolviert werden, wobei der gesamte Abgasstrom durch die zweite, kleine Turbine geführt wird.

Wird als Absperrelement eine Drosselklappe verwendet, können auch bei vollständig geschlossener Drosselklappe Leckageströme nie ganz vermieden werden kann, so daß die Turbinen unter sämtlichen Betriebsbedingungen zumindest von einem kleinen Abgasstrom durchströmt werden.

Vorteilhaft sind Ausführungsformen der Brennkraftmaschine, bei denen das Absperrelement elektrisch, hydraulisch, pneumatisch, mechanisch oder magnetisch steuerbar ist, vorzugsweise mittels Motorsteuerung.

Vorteilhaft sind Ausführungsformen der Brennkraftmaschine, bei denen das Absperrelement zur Steuerung des Abgasmassenstroms stromaufwärts der Turbine in der Abgasleitung angeordnet ist, so daß die Einstellung des Abgasmassenstromes vor d.h. stromaufwärts der Turbine erfolgt.

Vorteilhaft sind Ausführungsformen der Brennkraftmaschine, bei denen die erste Turbine eine variable Turbinengeometrie aufweist. Eine variable Turbinengeometrie erhöht die Flexibilität der Aufladung. Sie gestattet eine stufenlose Anpassung der Turbinengeometrie an den jeweiligen Betriebspunkt der Brennkraftmaschine bzw. an den Abgasmassenstrom. Im Gegensatz zu einer Turbine mit fester Geometrie muß kein Kompromiß bei der Auslegung der Turbine eingegangen werden, um in sämtlichen Drehzahlbereichen eine mehr oder weniger zufriedenstellende Aufladung zu realisieren. Insbesondere kann auf die energetisch nachteilige Ladeluftabblasung, aber auch auf eine Abgasabblasung, wie sie bei Waste-Gate-Turbinen vorgenommen wird, verzichtet werden.

Vorteilhaft sind Ausführungsformen der Brennkraftmaschine, bei denen die erste Turbine das Mittel zur Steuerung des Abgasmassenstroms in der ersten Abgasleitung bildet, wobei durch Verstellen der Turbine in Richtung Querschnittsverkleinerung eine Verkleinerung des durch die erste Turbine geführten Abgasmassenstroms realisierbar ist. Die veränderbare Geometrie wird bei dieser Ausführungsform genutzt, um den Strömungswiderstand der Turbine zu erhöhen und den durch die erste Turbine strömenden Abgasmassenstrom zu steuern. Wie oben bereits erwähnt eignet sich eine Turbine mit variabler Geometrie insbesondere für eine stufenlose Verstellung der Strömungsquerschnitte der Abgasleitung.

Zusätzliche Bauteile, insbesondere ein separates Absperrelement, sind nicht erforderlich, wenn die ohnehin bereits vorhandene Turbine des ersten Abgasturboladers zur Steuerung der Abgasmenge genutzt wird. Mit dem separaten Absperrelement entfällt auch eine separate Steuerung dieses Elementes und die dazu erforderliche Steuereinheit.

Vorteilhaft sind aber auch Ausführungsformen der Brennkraftmaschine, bei denen die erste Turbine eine feste, nicht veränderbare Turbinengeometrie aufweist. Im Gegensatz zu der zuvor beschriebenen Turbine mit variabler Geometrie (VTG) entfällt hier prinzipbedingt eine Steuerung. Im ganzen weist diese Ausführungsform daher insbesondere Kostenvorteile auf.

Vorteilhaft sind auch Ausführungsformen der Brennkraftmaschine, bei denen die erste Turbine als Waste-Gate-Turbine ausgeführt ist. Sogenannte Waste-Gate-Turbinen verfügen zum Zwecke einer Abgasabblasung über eine die Turbine überbrückende Bypaßleitung. Eine derartige Turbine kann daher gezielt auf kleine Abgasströme ausgelegt werden, was die Qualität der Aufladung im Teillastbereich deutlich verbessert. Mit zunehmendem Abgasstrom wird ein größerer Anteil des Abgases über die Bypaßleitung an der Turbine vorbei geführt. Zur Steuerung der Abgasabblasung ist ein Absperrelement in der Bypaßleitung vorgesehen. Eine Waste-Gate-Turbine ist kostengünstiger als eine Turbine mit variabler Geometrie. Zudem ist die Steuerung einfacher und daher ebenfalls kostengünstiger als bei einer variablen Turbinengeometrie.

Vorteilhaft sind Ausführungsformen der Brennkraftmaschine, bei denen der erste Verdichter eine variable Verdichtergeometrie aufweist. Wie bereits im Zusammenhang mit der VTG-Turbine ausgeführt, erhöht eine variable Geometrie die Qualität und Flexibilität der Aufladung aufgrund der Möglichkeit einer stufenlosen Anpassung der Geometrie an den jeweiligen Betriebspunkt der Brennkraftmaschine.

Insbesondere, wenn nur ein sehr geringer Abgasmassenstrom durch die erste Turbine geleitet wird, erweist sich eine variable Verdichtergeometrie (VVG) als vorteilhaft, da durch Verstellen der Schaufeln die Pumpgrenze des Verdichters im Verdichterkennfeld hin zu kleinen Verdichterströmen verschoben werden kann und so ein Arbeiten des Verdichters jenseits der Pumpgrenze vermieden wird.

Vorteile bietet die veränderbare Verdichtergeometrie des ersten Verdichters aber insbesondere in den Betriebszuständen, in denen das Abgas überwiegend bzw. vollständig die zweite, kleinere Turbine durchströmt und daher der zweite, kleinere Verdichter nahezu alleine bzw. vollständig den notwendigen Ladedruck generiert. In diesen Fällen stellt der erste Verdichter lediglich einen Strömungswiderstand für die vom zweiten Verdichter angesaugte Frischluft dar. Eine variable Verdichtergeometrie gestattet dann die Entdrosselung der Ansaugleitung durch Vergrößerung des Strömungsquerschnittes des ersten Verdichters.

Diese Ausführungsform ist insbesondere dann vorteilhaft, wenn die Turbine des ersten Abgasturboladers über eine variable Turbinengeometrie verfügt und die Verdichtergeometrie auf die Turbinengeometrie kontinuierlich abgestimmt wird.

Vorteilhaft sind Ausführungsformen der Brennkraftmaschine, bei denen der erste Verdichter eine feste, nicht veränderbare Verdichtergeometrie aufweist. Verdichter mit fester Geometrie weisen aus denselben Gründen wie Turbinen mit fester Geometrie, nämlich aufgrund der einfacheren Bauweise, Kostenvorteile auf.

Vorteilhaft sind Ausführungsformen der Brennkraftmaschine, bei denen der erste Verdichter mit einer ersten Bypaßleitung ausgestattet ist, die stromabwärts des ersten Verdichters aus der Gesamtansaugleitung abzweigt. Diese erste Bypaßleitung kann stromaufwärts des ersten Verdichters wieder in die Gesamtansaugleitung münden. Zur Steuerung der abgeblasenen Frischluftmenge ist ein Absperrelement in der ersten Bypaßleitung vorgesehen.

Vorteilhaft sind Ausführungsformen der Brennkraftmaschine, bei denen stromabwärts der Verdichter ein Ladeluftkühler in der Gesamtansaugleitung angeordnet ist. Der Ladeluftkühler senkt die Lufttemperatur und steigert damit die Dichte der Luft, wodurch auch der Kühler zu einer besseren Füllung des Brennraums mit Luft d. h. zu einer größeren Luftmasse beiträgt.

Vorteilhaft sind Ausführungsformen der Brennkraftmaschine, bei denen zwischen den Verdichtern ein zweiter Ladeluftkühler in der Gesamtansaugleitung angeordnet ist. Die im ersten Verdichter vorverdichtete Verbrennungsluft, die sich im Rahmen der Vorverdichtung erwärmt, wird auf diese Weise vor Eintritt in den zweiten Verdichter heruntergekühlt, was zu einer verbesserten Zylinderfüllung beiträgt und damit die Qualität der Aufladung weiter verbessert.

Vorteilhaft sind Ausführungsformen der Brennkraftmaschine, bei denen die Leitung zur Abgasrückführung stromabwärts der Ladeluftkühler in die Gesamtansaugleitung mündet. Auf diese Weise wird der Abgasstrom nicht durch die Ladeluftkühler geführt und kann folglich diese Kühler nicht durch Ablagerungen von im Abgasstrom enthaltenen Schadstoffen, insbesondere Rußpartikeln und Öl, verschmutzen.

Vorteilhaft sind Ausführungsformen der Brennkraftmaschine, bei denen in der Leitung zur Abgasrückführung ein zusätzlicher Kühler vorgesehen ist. Dieser zusätzliche Kühler senkt die Temperatur im heißen Abgasstrom und steigert damit die Dichte der Abgase. Die Temperatur der Zylinderfrischladung, die sich bei der Mischung der Frischluft mit dem rückgeführten Abgasen einstellt, wird hierdurch folglich weiter gesenkt, wodurch auch der zusätzliche Kühler zu einer besseren Füllung des Brennraums mit Frischgemisch beiträgt.

Vorteilhaft sind Ausführungsformen der Brennkraftmaschine, bei denen in der Leitung zur Abgasrückführung ein Absperrelement vorgesehen ist. Dieses Absperrelement dient der Steuerung der Abgasrückführrate. Anders als die Mittel, die zur Steuerung der Abgasmassenströme dienen und dadurch Einfluß auf den Abgasgegendruck nehmen und damit indirekt Einfluß auf die AGR-Rate haben, kann mit diesem Absperrelement die Abgasrückführung direkt gesteuert werden.

Im folgenden werden die bevorzugten Bauweisen der Turbine und des Verdichters des zweiten Abgasturboladers aufgeführt. Die Vorteile der einzelnen Bauweisen, nämlich der variablen Geometrie, der festen Geometrie sowie der Waste-Gate-Bauweise wurden bereits ausführlich im Zusammenhang mit dem ersten Abgasturbolader bzw. der ersten Turbine und dem ersten Verdichter erörtert, weshalb an dieser Stelle auf die entsprechenden Ausführungen Bezug genommen wird, um Wiederholungen zu vermeiden.

Vorteilhaft sind Ausführungsformen der Brennkraftmaschine, bei denen die zweite Turbine eine variable Turbinengeometrie aufweist. Dadurch wird insbesondere die Qualität und Flexibilität der Aufladung erhöht. Die Geometrie kann dem Abgasmassenstrom durch Verstellen der Laufradschaufeln angepaßt werden.

Vorteilhaft sind Ausführungsformen der Brennkraftmaschine, bei denen die zweite Turbine das Mittel zur Steuerung des Abgasmassenstroms in der zweiten Abgasleitung bildet, wobei durch Verstellen der Turbine in Richtung Querschnittsverkleinerung eine Verkleinerung des durch die zweite Turbine geführten Abgasmassenstroms realisierbar ist.

Vorteilhaft sind Ausführungsformen der Brennkraftmaschine, bei denen die zweite Turbine eine feste, nicht veränderbare Turbinengeometrie aufweist. Hierdurch wird ein kostengünstiges Aufladekonzept ermöglicht.

Vorteilhaft sind Ausführungsformen der Brennkraftmaschine, bei denen die zweite Turbine als Waste-Gate-Turbine ausgeführt ist. Hierdurch wird ein kostengünstiges Aufladekonzept ermöglicht und gleichzeitig eine Auslegung der Turbine auf kleine Abgasmassenströme d.h. auf den Teillastbereich, der insbesondere im Hinblick auf die zur Bestimmung der Schadstoffemissionen relevanten Tests von Interesse ist.

Vorteilhaft sind Ausführungsformen der Brennkraftmaschine, bei denen der zweite Verdichter eine variable Verdichtergeometrie aufweist. Wie oben bereits erwähnt bietet die variable Geometrie insbesondere Vorteile im Hinblick auf die Pumpgrenze des Verdichters durch Verschieben dieser Pumpgrenze. Es können auch bei einem kleinen Frischluftmassenstrom hohe Ladedrücke generiert werden. In Fällen, in denen die zweite Turbine keine oder nahezu keine Leistung zur Verdichtung bereitstellt, stellt der zweite Verdichter für die vom ersten Verdichter angesaugte und komprimierte Frischluft einen Strömungswiderstand auf dem Weg zu den Zylinder der Brennkraftmaschine dar. Eine variable Verdichtergeometrie gestattet durch Vergrößerung des Strömungsquerschnittes eine Entdrosselung der Ansaugleitung.

Vorteilhaft sind Ausführungsformen der Brennkraftmaschine, bei denen der zweite Verdichter eine feste, nicht veränderbare Verdichtergeometrie aufweist. Kostenvorteile und die Vereinfachung der Motorsteuerung der gesamten Brennkraftmaschine stehen dabei im Vordergrund.

Vorteilhaft sind Ausführungsformen der Brennkraftmaschine, bei denen der zweite Verdichter mit einer zweiten Bypaßleitung ausgestattet ist, die stromabwärts des zweiten Verdichters aus der Gesamtansaugleitung abzweigt. Z ur Steuerung der abgeblasenen Frischluftmenge kann ein Absperrelement in der zweiten Bypaßleitung vorgesehen. Für den Fall, daß das Abgas überwiegend bzw. vollständig durch die zweite Turbine geleitet wird und der zweite Verdichter nahezu die vollständige Verdichterarbeit leistet, erweist sich die Bypaßleitung als vorteilhaft, da der Verdichter eventuell an seine Pumpgrenze kommt und die Bypaßleitung dann das Pumpen vermeiden hilft.

Vorteilhaft sind insbesondere Ausführungsformen der Brennkraftmaschine, bei denen die zweite Bypaßleitung stromabwärts des ersten Verdichters bzw. stromaufwärts des zweiten Verdichters in die Gesamtansaugleitung einmündet, wobei vorzugsweise in der zweiten Bypaßleitung ein Absperrelement vorgesehen ist.

Diese Ausführungsform ist insbesondere bei hohen Drehzahlen bzw. großen Abgasmengen vorteilhaft, wenn der wesentliche Anteil des Abgases durch die erste, größere Turbine geleitet wird. Unter diesen Betriebsbedingungen arbeitet der zweite, kleinere Verdichter kaum bzw. gar nicht, so daß der erste Verdichter die Frischluft durch den zweiten Verdichter hindurch fördern muß, was energetisch nachteilig ist, da der zweite Verdichter einen Strömungswiderstand für die im ersten Verdichter komprimierte Frischluft auf dem Weg zu den Zylindern darstellt. Dabei sinkt der mittels des ersten Verdichters generierte Ladedruck zwangsläufig.

Mittels der in Rede stehenden vorteilhaften Ausführungsform kann dies vermieden werden, indem durch Öffnen des Absperrelements die zweite Bypaßleitung geöffnet wird und der erste Verdichter bei Umgehung des zweiten Verdichters am zweiten Verdichter vorbei fördert. Zwar kann ein Teil der Frischluft in den zweiten Verdichter hineingelangen. In der Regel nimmt die Frischluftströmung aber die Leitung mit dem geringsten Strömungswiderstand, die bei voll geöffnetem Absperrelement von der Bypaßleitung gebildet wird.

Aus diesem Grund sind aber Ausführungsformen der Brennkraftmaschine besonders vorteilhaft, bei denen stromaufwärts des zweiten Verdichters vor der Einmündung der zweiten Bypaßleitung ein Absperrelement in der Gesamtansaugleitung vorgesehen ist. Dadurch wird die aus dem ersten Verdichter kommende Frischluftströmung bei geschlossenem Absperrelement zwangsweise in die Bypaßleitung gelenkt und eine Förderung in den zweiten Verdichter vollständig unterbunden.

Vorteilhaft sind in diesem Zusammenhang des weiteren Ausführungsformen der Brennkraftmaschine, bei denen stromabwärts des zweiten Verdichters vor der Abzweigung der zweiten Bypaßleitung ein Absperrelement in der Gesamtansaugleitung vorgesehen ist, um durch ein Schließen dieses Absperrelements eine Rückströmung der Ladeluft in den zweiten Verdichter zu vermeiden.

An dieser Stelle sei angemerkt, daß die zweite Bypaßleitung zusammen mit dem Absperrelement, das stromaufwärts des zweiten Verdichters vor der Einmündung der zweiten Bypaßleitung in die Gesamtansaugleitung vorgesehen ist, ebenfalls dazu verwendet werden kann, die beiden Verdichter parallel zu betreiben.

Vorteilhaft sind Ausführungsformen der Brennkraftmaschine, bei denen der zweite Verdichter mittels einer zusätzlichen Leitung mit der Umgebung verbindbar ist.

Diese Ausführungsform ist insbesondere bei niedrigen Drehzahlen bzw. kleinen Abgasmengen vorteilhaft, wenn der wesentliche Anteil des Abgases durch die zweite, kleinere Turbine geleitet wird. Unter diesen Betriebsbedingungen arbeitet der erste, größere Verdichter kaum bzw. gar nicht, so daß der zweite Verdichter die Frischluft durch den ersten Verdichter hindurch fördern d. h. ansaugen muß, was energetisch nachteilig ist, da der erste Verdichter einen Strömungswiderstand bzw. eine Drosselstelle für die angesaugte Frischluft auf dem Weg zum zweiten Verdichter darstellt. Dabei sinkt der Druck in der angesaugten Luft. Zudem zieht der zweite Verdichter beim Ansaugen der Frischluft Öl aus dem ersten Verdichter, was insbesondere im Hinblick auf die Schadstoffemissionen nachteilig ist und vermieden werden sollte.

Mittels der in Rede stehenden vorteilhaften Ausführungsform kann dies vermieden werden, indem der zweite Verdichter mit einer zusätzlichen Leitung ausgestattet wird, mit der dieser Verdichter Frischluft bei Umgehung des ersten Verdichters aus der Umgebung ansaugen kann. Dabei ist in dieser zusätzlichen Leitung vorzugsweise ein Absperrelement vorgesehen, mit dem die Verbindung zur Umgebung unterbrochen werden kann.

Vorteilhaft sind in diesem Zusammenhang Ausführungsformen der Brennkraftmaschine, bei denen zwischen den beiden Verdichtern ein Absperrelement in der Gesamtansaugleitung vorgesehen ist. Das Absperrelement dient dazu, den Frischluftstrom durch den ersten Verdichter vollständig zu unterbinden, während der zweite Verdichter Frischluft über die zusätzliche Leitung aus der Umgebung ansaugt.

Die zweite der Erfindung zugrunde liegende Teilaufgabe wird gelöst durch ein Verfahren zum Betreiben einer aufgeladenen Brennkraftmaschine, das dadurch gekennzeichnet ist, daß

■ die erste Turbine größer ausgelegt wird als die zweite Turbine,

■ der erste Verdichters größer ausgelegt wird als der zweite Verdichter, und

■ bei niedrigen Drehzahlen bzw. kleinen Abgasmengen die in der ersten Abgasleitung und in der zweiten Abgasleitung vorgesehenen Mittel in der Art gesteuert werden, daß der wesentliche Anteil des Abgases durch die zweite Turbine geführt wird d. h. der durch die zweite Turbine geleitete Abgasmassenstrom größer ist als der durch die erste Turbine geleitete Abgasmassenstrom, und

■ bei hohen Drehzahlen bzw. großen Abgasmengen die in der ersten Abgasleitung und in der zweiten Abgasleitung vorgesehenen Mittel in der Art gesteuert werden, daß der wesentliche Anteil des Abgases durch die erste Turbine geführt wird d. h. der durch die erste Turbine geleitete Abgasmassenstrom größer ist als der durch die zweite Turbine geleitete Abgasmassenstrom.

Das im Zusammenhang mit der erfindungsgemäßen Brennkraftmaschine Gesagte gilt ebenfalls für das erfindungsgemäße Verfahren. Durch die Auslegung der Abgasturbolader in der beschriebenen Weise und die Steuerung der Abgasströme in Abhängigkeit von der Drehzahl bzw. in Abhängigkeit von der Menge an heißen Abgasen ist es möglich, hohe AGR-Raten und gleichzeitig hohe Ladedrücke unter sämtlichen Betriebsbedingungen der Brennkraftmaschine zu realisieren.

Obwohl die beiden Turbinen in den zwei Abgasleitungen symmetrisch angeordnet sind, werden sie unterschiedlich ausgelegt, um im gesamten Motorkennfeld eine optimierte Aufladung zu gewährleisten. Während die zweite Turbine im Hinblick auf kleine Abgasmassenströme ausgelegt wird, erfolgt die Auslegung der ersten Turbine auf größere Abgasmassenströme.

Vorteilhaft sind Ausführungsformen des Verfahrens, bei denen der zweite Verdichter mit einer zusätzlichen Leitung ausgestattet wird, mit der dieser zweite Verdichter bei niedrigen Drehzahlen mit der Umgebung verbunden wird, wobei in der zusätzlichen Leitung zum Öffnen und Schließen dieser Leitung ein Absperrelement vorgesehen wird.

Vorteilhaft sind dabei Ausführungsformen des Verfahrens, bei denen zwischen den beiden Verdichtern ein Absperrelement in der Gesamtansaugleitung vorgesehen wird, das geschlossen wird, wenn der zweite Verdichter mittels der zusätzlichen Leitung mit der Umgebung verbunden wird.

Wie bereits oben ausgeführt, kann dadurch vermieden werden, daß der zweite Verdichter bei kleinen Drehzahlen bzw. kleinen Abgasmassenströmen, wenn der erste Verdichter nicht oder kaum fördert, die Frischluft durch den ersten Verdichter hindurch ansaugen muß.

Vorteilhaft sind Ausführungsformen des Verfahrens, bei denen der zweite Verdichter mit einer zweiten Bypaßleitung ausgestattet wird, die stromabwärts des zweiten Verdichters aus der Gesamtansaugleitung abzweigt und stromabwärts des ersten Verdichters bzw. stromaufwärts des zweiten Verdichters in die Gesamtansaugleitung einmündet, wobei in dieser zweiten Bypaßleitung ein Absperrelement vorgesehen wird, das bei hohen Drehzahlen bzw. großen Abgasmengen vollständig geöffnet wird.

Vorteilhaft sind dabei Ausführungsformen des Verfahrens, bei denen stromaufwärts des zweiten Verdichters vor der Einmündung der zweiten Bypaßleitung ein Absperrelement in der Gesamtansaugleitung vorgesehen wird, das bei hohen Drehzahlen bzw. großen Abgasmengen vollständig geschlossen wird.

Die beiden zuletzt genannten Verfahrensvarianten ermöglichen eine Umgehung des zweiten Verdichters, was Vorteile aufweist, wenn bei hohen Drehzahlen bzw. großen Abgasströmen der zweite Verdichter nicht oder kaum fördert und im Hinblick auf die aus dem ersten Verdichter kommende Frischluft lediglich einen Strömungswiderstand darstellt.

Vorteilhaft sind Ausführungsformen des Verfahrens, bei denen die erste Turbine mit einer variablen Turbinengeometrie ausgestattet wird und bei niedrigen Drehzahlen bzw. kleinen Abgasmengen durch Verstellen der variablen Turbinengeometrie der Turbinenquerschnitt der ersten Turbine reduziert wird.

Dadurch wird der Strömungswiderstand der ersten Turbine erhöht, wodurch der wesentliche Anteil der heißen Abgase durch die zweite, kleinere Turbine geführt wird, die auf diese kleinen Abgasmassenströme ausgelegt ist und daher unter diesen Betriebsbedingungen hohe Ladedrücke generieren kann. Zudem ist damit ein hoher Abgasgegendruck in den Abgasleitungen gewährleistet, so daß gleichzeitig auch hohe AGR-Raten realisiert werden können.

Vorteilhaft sind Ausführungsformen des Verfahrens, bei denen die zweite Turbine mit einer variablen Turbinengeometrie ausgestattet wird und bei hohen Drehzahlen bzw. großen Abgasmengen durch Verstellen der variablen Turbinengeometrie der Turbinenquerschnitt der zweiten Turbine reduziert wird.

Dadurch wird der Strömungswiderstand der zweiten Turbine erhöht, weshalb der wesentliche Anteil der heißen Abgase durch die erste, größere Turbine geführt wird, die auf diese großen Abgasmassenströme ausgelegt ist und daher unter diesen Betriebsbedingungen hohe Ladedrücke generieren kann. Ein hoher Abgasgegendruck in den Abgasleitungen und damit auch hohe AGR-Raten sind gewährleistet.

Vorteilhaft sind Ausführungsformen des Verfahrens, bei denen als Mittel zur Steuerung des Abgasmassenstroms in der ersten Abgasleitung und/oder als Mittel zur Steuerung des Abgasmassenstroms in der zweiten Abgasleitung ein Absperrelement, vorzugsweise ein Ventil, verwendet wird, welche

■ bei niedrigen Drehzahlen bzw. kleinen Abgasmengen in der Art gesteuert werden, daß der wesentliche Anteil des Abgases durch die zweite Turbine geführt wird d.h. der durch die zweite Turbine geleitete Abgasmassenstrom größer ist als der durch die erste Turbine geleitete Abgasmassenstrom, und
■ bei hohen Drehzahlen bzw. großen Abgasmengen in der Art gesteuert werden, daß der wesentliche Anteil des Abgases durch die erste Turbine geführt wird d. h. der durch die erste Turbine geleitete Abgasmassenstrom größer ist als der durch die zweite Turbine geleitete Abgasmassenstrom

Im folgenden wird die Erfindung anhand von zehn Ausführungsbeispielen gemäß den Figuren 1 bis 10 näher beschrieben. Hierbei zeigt:

Fig. 1     schematisch eine erste Ausführungsform der Brennkraftmaschine,

Fig. 2     schematisch eine zweite Ausführungsform der Brennkraftmaschine,

Fig. 3     schematisch eine dritte Ausführungsform der Brennkraftmaschine,

Fig. 4     schematisch eine vierte Ausführungsform der Brennkraftmaschine,

Fig. 5     schematisch eine fünfte Ausführungsform der Brennkraftmaschine,

Fig. 6     schematisch eine sechste Ausführungsform der Brennkraftmaschine,

Fig. 7     schematisch eine siebte Ausführungsform der Brennkraftmaschine,

Fig. 8     schematisch eine achte Ausführungsform der Brennkraftmaschine,

Fig. 9     schematisch eine neunte Ausführungsform der Brennkraftmaschine, und

Fig. 10 schematisch eine zehnte Ausführungsform der Brennkraftmaschine.

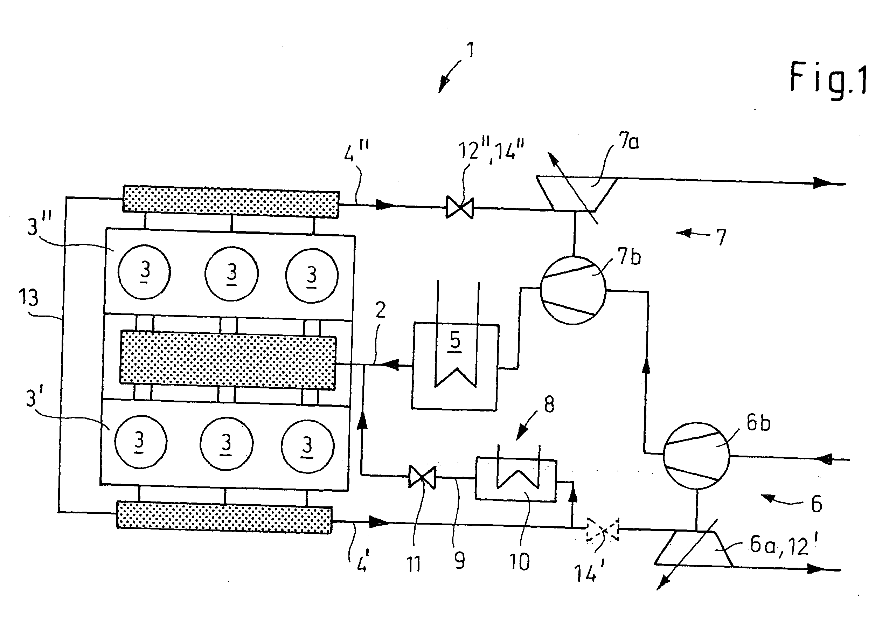

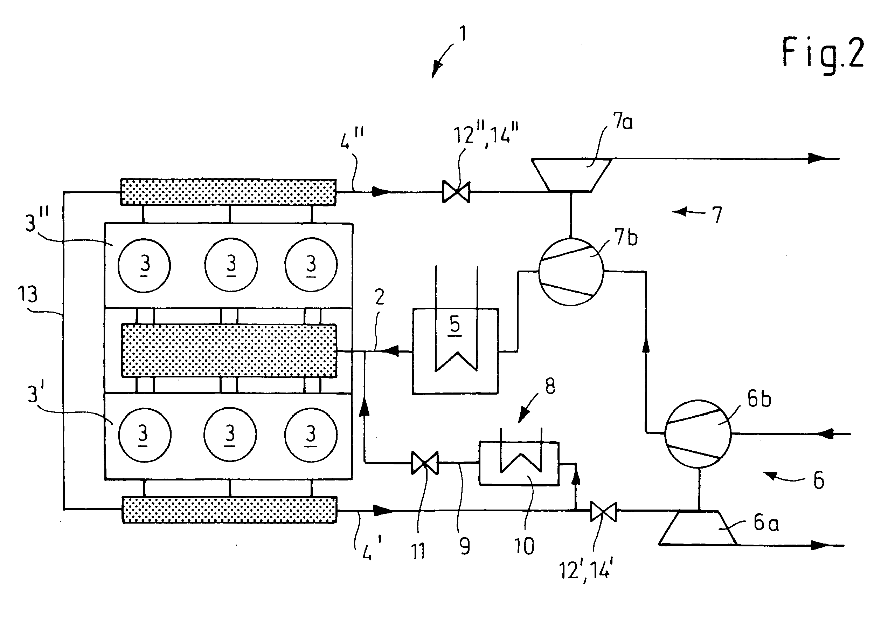

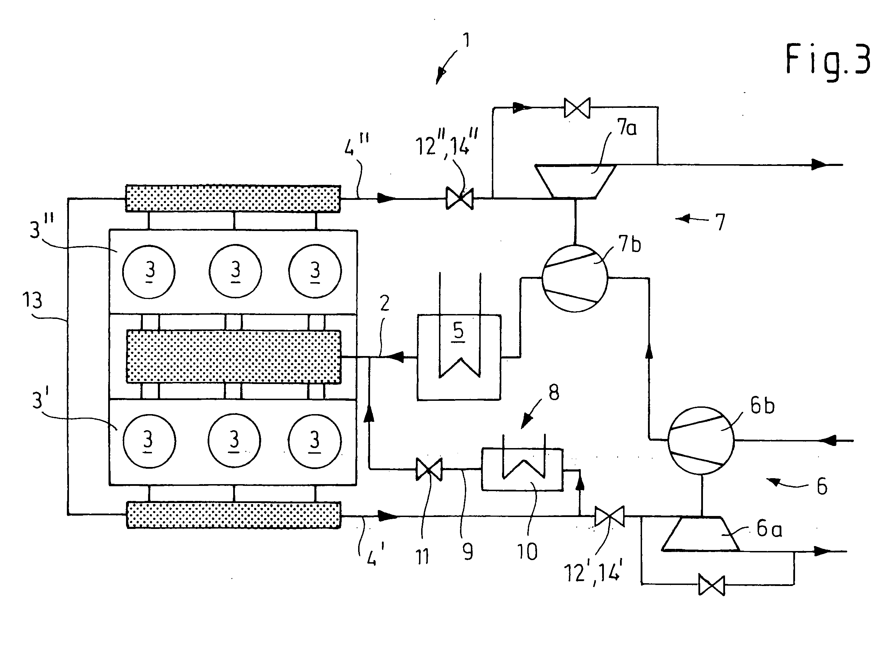

Die ersten neun Figuren können zu drei Gruppen zusammengefaßt werden, wobei die Figuren 1, 4 und 7 die erste Gruppe, die Figuren 2, 5 und 8 die zweite Gruppe und die Figuren 3, 6 und 9 die dritte Gruppe bilden. Die einzelnen Figurengruppen sind dadurch gekennzeichnet, daß die Figuren einer Gruppe mit aufsteigender Numerierung jeweils aufeinander aufbauen.

Figur 1 zeigt eine erste Ausführungsform der aufgeladenen Brennkraftmaschine 1 am Beispiel eines Sechs-Zylinder-V-Motors. Die Zylinder 3 der Brennkraftmaschine 1 sind in zwei Zylindergruppen 3',3" aufgeteilt, die jeweils über eine Abgasleitung 4',4" verfügen, wobei eine Verbindungsleitung 13 vorgesehen ist, durch die die beiden Abgasleitungen 4',4" miteinander in Verbindung stehen.

Es sind zwei Abgasturbolader 6,7 vorgesehen, wobei die erste Turbine 6a des ersten Abgasturboladers 6 in der ersten Abgasleitung 4' der ersten Zylindergruppe 3' und die zweite Turbine 7a des zweiten Abgasturboladers 7 in der zweiten Abgasleitung 4" der zweiten Zylindergruppe 3" angeordnet ist.

Die diesen beiden Turbinen 6a,7a zugeordneten Verdichter 6b,7b sind in einer gemeinsamen Gesamtansaugleitung 2 angeordnet, wobei der zweite Verdichter 7b des zweiten Abgasturboladers 7 stromabwärts des ersten Verdichters 6b des ersten Abgasturboladers angeordnet ist. Damit verfügt die Brennkraftmaschine 1 über zwei parallel geschaltete bzw. angeordnete Turbinen 6a,7a und über zwei in Reihe geschaltete bzw. angeordnete Verdichter 6b,7b.

Der erste Verdichters 6b ist größer ausgelegt als der zweite Verdichter 7b, weil der erste Verdichter 6b die Niederdruckstufe der zweistufigen Verdichtung bildet, wohingegen der zweite Verdichter 7b die bereits vorverdichtete Luft komprimiert und somit die kleiner auszulegende Hochdruckstufe bildet.

Stromabwärts der Verdichter 6b,7b ist ein Ladeluftkühler 5 in der Gesamtansaugleitung 2, die zur Versorgung der Brennkraftmaschine 1 mit Frischluft bzw. Frischgemisch dient, angeordnet. Der Ladeluftkühler 5 senkt die Lufttemperatur und steigert damit die Dichte der Luft, wodurch er zu einer besseren Füllung der Zylinder 3 mit Luft beiträgt.

Die Brennkraftmaschine 1 ist des weiteren mit einer Abgasrückführung 8 ausgestattet. Hierzu zweigt eine Leitung 9 stromabwärts der ersten Turbine 6a aus der ersten Abgasleitung 4' ab und mündet in die Gesamtansaugleitung 2. Dabei mündet die Leitung 9 zur Abgasrückführung 8 stromaufwärts des Ladeluftkühlers 5 in die Gesamtansaugleitung 2. Auf diese Weise wird der Abgasstrom nicht durch den Ladeluftkühler 5 geführt und kann diesen Kühler 5 nicht verschmutzen.

In der Leitung 9 zur Abgasrückführung ist ein zusätzlicher Kühler 10 vorgesehen, der die Temperatur des heißen Abgasstromes senkt. Ebenfalls in der ersten Leitung 9 ist zur Steuerung der Abgasrückführrate ein Absperrelement 11 angeordnet.

Grundsätzlich kann die Leitung 9 zur Abgasrückführung 8 auch von der zweiten Abgasleitung 4" bzw. an jeder beliebigen Stelle des Abgassystems abzweigen, da die beiden Abgasleitungen 4',4" der beiden Zylindergruppen 3',3" über die Verbindungsleitung 13 miteinander in Verbindung stehen.

Bei der in der Figur 1 dargestellten Ausführungsform verfügt sowohl die Turbine 6a des ersten Abgasturboladers 6 als auch die Turbine 7a des zweiten Abgasturboladers 7 über eine variable Turbinengeometrie (VTG - kenntlich gemacht durch den Pfeil), die durch Verstellen der Turbinenschaufeln eine stufenlose Anpassung der Turbinengeometrie an den jeweiligen Betriebspunkt der Brennkraftmaschine 1 ermöglicht. Dadurch wird insbesondere die Qualität und Flexibilität der Aufladung erhöht. Die Geometrie der Turbine 6b,7b kann dem momentanen Abgasmassenstrom durch Verstellen der Laufradschaufeln angepaßt werden.

Die Verdichter 6b,7b können eine feste Geometrie aufweisen oder ebenfalls mit einer variablen Geometrie ausgeführt sein. Eine variable Geometrie ist vorteilhaft, wenn die entsprechende Turbine 6a,7a über eine variable Turbinengeometrie verfügt und die Verdichtergeometrie auf die Turbinengeometrie kontinuierlich abgestimmt wird.

Insbesondere bei kleinen Abgasmassenströmen durch die Turbine 6a,7a und den damit verbundenen kleinen Verdichtermassenströmen erweist sich eine variable Verdichtergeometrie (VVG) als vorteilhaft, da durch Verstellen der Schaufeln die Pumpgrenze des Verdichters 6b,7b im Verdichterkennfeld hin zu kleinen Verdichterströmen verschoben werden kann und so ein Arbeiten des Verdichters 6b,7b jenseits der Pumpgrenze vermieden wird. Grundsätzlich können die Verdichter 6b, 7b auch mit einer Leitung zur Ladeluftabblasung ausgestattet sein, was aber aus energetischen Gründen Nachteile aufweist.

Erfindungsgemäß werden sowohl in der ersten Abgasleitung 4' als auch in der zweiten Abgasleitung 4" Mittel 12',12" vorgesehen, mit denen die beiden Abgasströme, welche durch die beiden Turbinen 6a,7a geleitet werden, gesteuert werden können.

Bei der in Figur 1 dargestellten Ausführungsform ist das Mittel 12" zur Steuerung des Abgasmassenstroms in der zweiten Abgasleitung 4" ein Absperrelement 14". Mit Hilfe des Absperrelementes 14" kann der Strömungsquerschnitt der zweiten Abgasleitung 4" verändert werden, wobei eine Verkleinerung des Strömungsquerschnittes der zweiten Abgasleitung 4" zu einer Verkleinerung des Abgasmassenstromes durch die zweite Turbine 7a führt.

Das Mittel 12' zur Steuerung des Abgasmassenstroms in der ersten Abgasleitung 4' wird durch die erste Turbine 6a, welche eine variable Turbinengeometrie aufweist, gebildet, wobei durch Verstellen der Turbine 6a bzw. Verdrehen der Schaufeln dieser Turbine 6a in Richtung Querschnittsverkleinerung eine Verkleinerung des durch die erste Turbine 6a geführten Abgasmassenstroms erzielt wird. Die veränderbare Geometrie wird bei dieser Ausführungsform genutzt, um den Strömungswiderstand der Turbine 6a zu erhöhen und den durch die erste Turbine 6a strömenden Abgasmassenstrom zu steuern.

Alternativ oder zusätzlich kann in der ersten Abgasleitung 4' auch ein Absperrelement 14' vorgesehen werden, um den Abgasmassenstrom durch die erste Turbine 6a zu beeinflussen bzw. zu steuern, was durch ein gestrichelt dargestelltes Absperrelement 14' angedeutet ist. Ebenso könnte bei einer zu der ersten Ausführungsform der Brennkraftmaschine 1 alternativen Ausführungsform auf das Absperrelement 14" in der zweiten Abgasleitung 4" verzichtet werden und der Abgasmassenstrom durch die zweite Turbine 7a mittels variabler Turbinengeometrie beeinflußt bzw. gesteuert werden.

Dadurch, daß beide Abgasleitungen 4', 4" miteinander verbunden sind, kann der gesamte Abgasstrom sowohl vollständig durch die erste Turbine 6a als auch vollständig durch die zweite Turbine 7a geleitet werden. Eine Aufteilung der heißen Abgase auf beide Turbinen 6a,7a ist grundsätzlich auch möglich, insbesondere eine asymmetrische Aufteilung, so daß eine Turbine 6a,7a mit einem größeren Abgasstrom und die andere Turbine 6a,7a mit einem kleineren Abgasstrom beaufschlagt werden kann.

Bei niedrigen Drehzahlen bzw. geringen Abgasmengen werden die in den Abgasleitungen 4', 4" vorgesehenen Mittel 12'12" in der Art gesteuert, daß der wesentliche Anteil des Abgases durch die zweite, kleinere Turbine 7a, die auf kleine Abgasströme ausgelegt ist, geleitet wird. Wird der Abgasstrom zur Generierung hoher Ladedrücke im unteren und mittleren Teillastbereich im wesentlichen durch die kleine Turbine geführt, wird dadurch gleichzeitig ein ausreichend hoher Abgasgegendruck in den Abgasleitungen 4',4" gewährleistet, wodurch die Möglichkeit zur Realisierung hoher AGR-Raten sichergestellt wird.

Bei hohen Drehzahlen bzw. großen Abgasmengen werden die in den Abgasleitungen 4', 4" vorgesehenen Mittel 12',12" dann in der Art gesteuert, daß der wesentliche Anteil des Abgases durch die erste, größere Turbine 6a, die auf große Abgasmassenströme ausgelegt ist, geleitet wird.

Figur 2 zeigt schematisch eine zweite Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 2 dargestellten Brennkraftmaschine 1 in der ersten Abgasleitung 4' ein Absperrelement 14' stromaufwärts der ersten Turbine 6a vorgesehen, um den Abgasmassenstrom durch die erste Turbine 6a zu beeinflussen bzw. zu steuern.

Zudem sind die beide Turbinen 6a,7a mit einer festen d. h. unveränderlichen Turbinengeometrie ausgeführt. Im Gegensatz zu der zuvor beschriebenen Ausführungsform, bei der beide Turbinen 6a,7a mit einer variablen Geometrie (VTG) ausgeführt sind, entfällt hier prinzipbedingt eine Steuerung. Im ganzen weist diese Ausführungsform insbesondere Kostenvorteile auf.

Figur 3 zeigt schematisch eine dritte Ausführungsform der aufgeladenen Brennkraftmaschine 1. Es sollen nur die Unterschiede zu der in Figur 2 dargestellten Ausführungsform erörtert werden, weshalb im übrigen bezug genommen wird auf Figur 2. Für dieselben Bauteile wurden dieselben Bezugszeichen verwendet.

Im Unterschied zu der in Figur 2 dargestellten Ausführungsform sind bei der in Figur 3 dargestellten Brennkraftmaschine 1 beide Turbinen 6a,7a als sogenannte Waste-Gate-Turbinen ausgebildet. Die Waste-Gate-Turbinen 6a,7a verfügen zum Zwecke einer Abgasabblasung über eine die Turbine 6a,7a umgehende Bypaßleitung, was ein Kennzeichen dieser speziellen Turbinenbauweise ist. Die Turbine 6a,7a wird auf kleine Abgasströme ausgelegt, was die Qualität der Aufladung im Teillastbereich deutlich verbessert. Mit zunehmendem Abgasstrom wird ein größerer Anteil des Abgases über die Bypaßleitung an der Turbine 6a,7a vorbei geführt. Zur Steuerung der Abgasabblasung ist ein Absperrelement in der Bypaßleitung vorgesehen.

Im Hinblick auf die Ausbildung einer erfindungsgemäßen Brennkraftmaschine 1 ist es vorteilhaft, wenn die Bypaßleitungen der Waste-Gate-Turbinen 6a,7a stromabwärts der in den Abgasleitungen 4', 4" angeordneten Absperrelemente 14',14" aus den Abgasleitungen 4',4" abzweigen, damit der durch die Turbine 6a,7a bzw. Bypaßleitung geführte Abgasstrom tatsächlich mittels Absperrelement 14', 14" steuerbar ist.

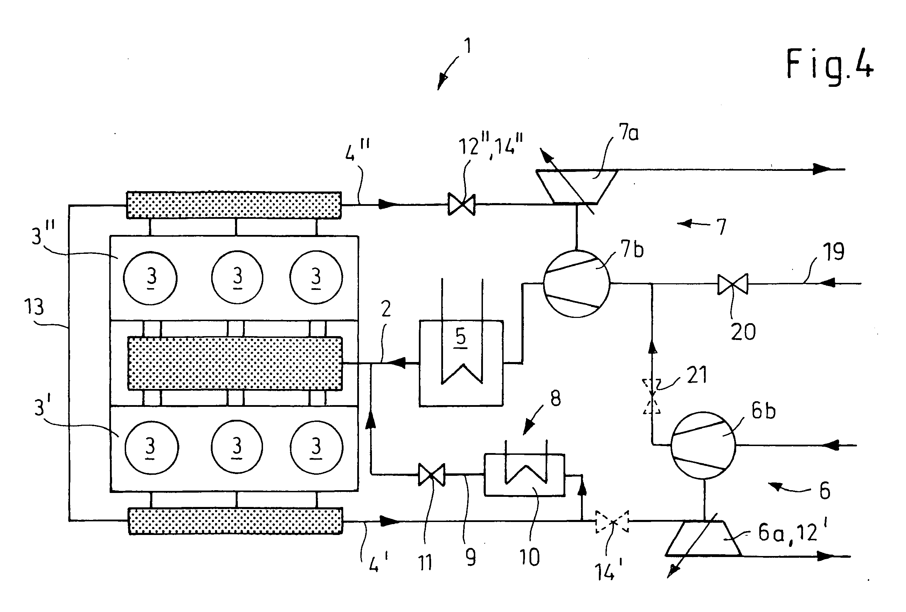

Figur 4 zeigt schematisch eine vierte Ausführungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 4 dargestellten Brennkraftmaschine 1 der zweite Verdichter 7b mittels einer zusätzlichen Leitung 19, in der ein Absperrelement 20 vorgesehen ist, mit der Umgebung verbindbar.

Diese Ausführungsform ist insbesondere bei niedrigen Drehzahlen bzw. kleinen Abgasmengen vorteilhaft, wenn der wesentliche Anteil des Abgases durch die zweite, kleinere Turbine 7a geleitet wird. Unter diesen Betriebsbedingungen arbeitet der erste, größere Verdichter 6b kaum bzw. gar nicht, so daß der zweite Verdichter 7b die Frischluft durch den ersten Verdichter 6b hindurch fördern d.h. ansaugen muß, was energetisch nachteilig ist. Zudem zieht der zweite Verdichter 7b beim Ansaugen der Frischluft Öl aus dem ersten Verdichter 6b, was insbesondere im Hinblick auf die Schadstoffemissionen nachteilig ist und durch Öffnen des Absperrelementes 20 und Ansaugen von Frischluft durch die zusätzliche Leitung 19 aus der Umgebung vermieden werden kann.

Zusätzlich kann in der Gesamtansaugleitung 2 zwischen den beiden Verdichtern 6b,7b ein Absperrelement 21 vorgesehen werden, um den Frischluftstrom durch den ersten Verdichter 6b vollständig zu unterbinden, während der zweite Verdichter 7b Frischluft über die zusätzliche Leitung 19 aus der Umgebung ansaugt. Dieses Absperrelement 21 ist in Figur 4 gestrichelt angedeutet.

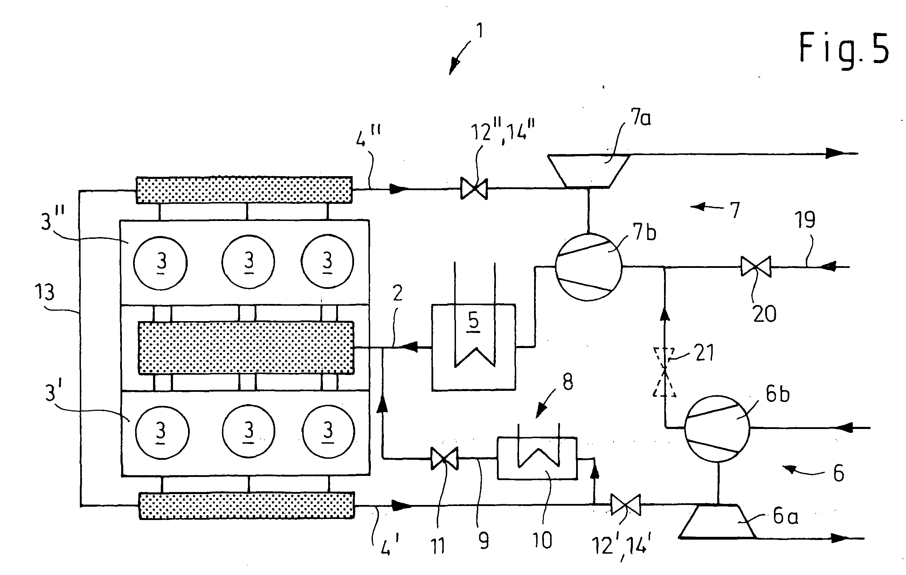

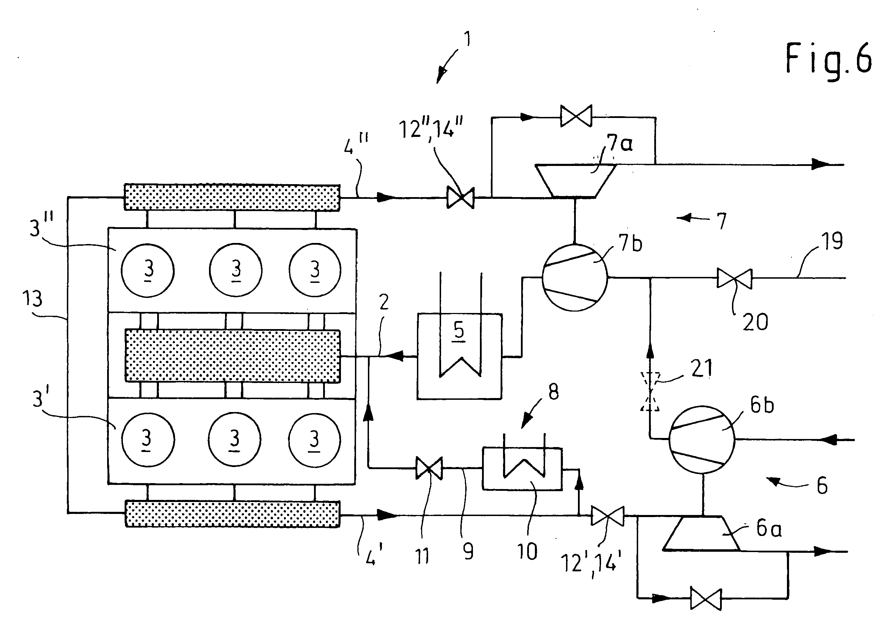

Die Figur 5 bzw. 6 baut in gleicher Weise auf der Figur 2 bzw. 3 auf wie die Figur 4 auf der Figur 1 aufbaut. Die Ausführungsformen unterscheiden sich durch die Anordnung einer zusätzlichen Leitung 19, die es dem zweiten Verdichter 7b gestattet, Frischluft aus der Umgebung anzusaugen, einem in dieser Leitung 19 vorgesehenen Absperrelement 20, sowie einem zwischen den Verdichtern 6b,7b in der Gesamtansaugleitung 2 angeordneten Absperrelement 21. Aus diesem Grund wird Bezug genommen auf die zuvor beschriebene Ausführungsform gemäß Figur 4. Für dieselben Bauteile wurden dieselben Bezugszeichen verwendet.

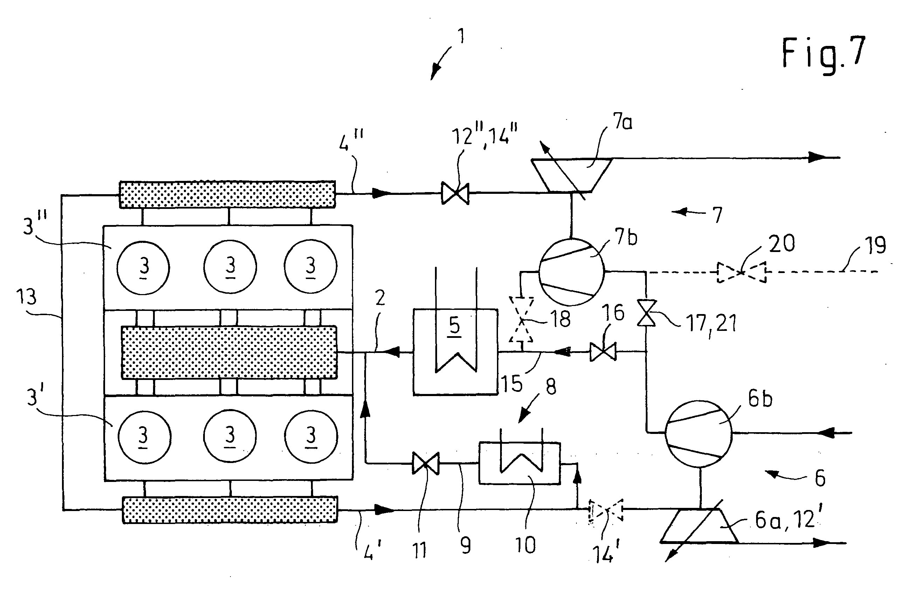

Figur 7 zeigt schematisch eine siebte Ausführrungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 7 dargestellten Brennkraftmaschine 1 der zweite Verdichter 7b mit einer zweiten Bypaßleitung 15 ausgestattet, die stromabwärts des zweiten Verdichters 7b aus der Gesamtansaugleitung 2 abzweigt und stromabwärts des ersten Verdichters 6b bzw. stromaufwärts des zweiten Verdichters 7b wieder in die Gesamtansaugleitung 2 einmündet, wobei in der zweiten Bypaßleitung 15 ein Absperrelement 16 vorgesehen ist, um den durch diese Bypaßleitung 15 strömenden Frischluftmassenstrom zu beeinflussen bzw. zu steuern.

Diese Ausführungsform der erfindungsgemäßen Brennkraftmaschine 1 ist insbesondere bei hohen Drehzahlen bzw. großen Abgasmengen vorteilhaft, wenn der wesentliche Anteil des Abgases durch die erste, größere Turbine 7a geleitet wird. Unter diesen Betriebsbedingungen arbeitet der zweite, kleinere Verdichter 6b kaum bzw. gar nicht, so daß der erste Verdichter 6b die Frischluft durch den zweiten Verdichter 7b hindurch fördern muß, was energetisch nachteilig ist, da der zweite Verdichter 7b einen Strömungswiderstand für die im ersten Verdichter 6b komprimierte Frischluft auf dem Weg zu den Zylindern 3 darstellt. Dabei sinkt der mittels des ersten Verdichters 6b generierte Ladedruck zwangsläufig.

Mit der in Figur 7 dargestellten Ausführungsform kann die Aufladung optimiert werden, indem durch Öffnen des Absperrelements 16 die zweite Bypaßleitung 15 freigegeben wird und der erste Verdichter 6b über die zweite Bypaßleitung 15 und am zweiten Verdichter 7b vorbei fördert.

Dabei kann Frischluft in den zweiten Verdichter 7b hineingelangen. In der Regel nimmt die Frischluftströmung zwar die Leitung mit dem geringsten Strömungswiderstand, die bei voll geöffnetem Absperrelement 16 von der Bypaßleitung 15 gebildet wird. Um die Durchströmung des zweiten Verdichters 7b aber vollständig zu unterbinden, wird stromaufwärts des zweiten Verdichters 7b vor der Einmündung der zweiten Bypaßleitung 15 ein Absperrelement 17 in der Gesamtansaugleitung 2 vorgesehen. Dadurch wird die aus dem ersten Verdichter 6b kommende Frischluftströmung bei geschlossenem Absperrelement 17 zwangsweise in die Bypaßleitung 15 gelenkt.

Zudem wird stromabwärts des zweiten Verdichters 7b vor der Abzweigung der zweiten Bypaßleitung 15 ein Absperrelement 18 in der Gesamtansaugleitung 2 vorgesehen. Durch Schließen dieses Absperrelements 18 wird ein Rückströmen der Ladeluft in den zweiten Verdichter 7b vermieden.

Die bei der in Figur 7 dargestellten Ausführrungsform zusätzlich vorgesehene Bypaßleitung 15 und die zusätzlichen Absperrelemente 16,17 gestatten es, die beiden Verdichter 6b,7b parallel zu betreiben und somit zwischen einer zweistufigen und einstufigen Auflaung zu wechseln.

Des weiteren kann - wie bei den Ausführungsformen gemäß der Figuren 4,5 und 6 - eine zusätzliche Leitung 19 vorgesehen werden, die gestrichelt gezeichnet angedeutet ist und mit der der zweite Verdichter 7b Frischluft aus der Umgebung ansaugen kann.

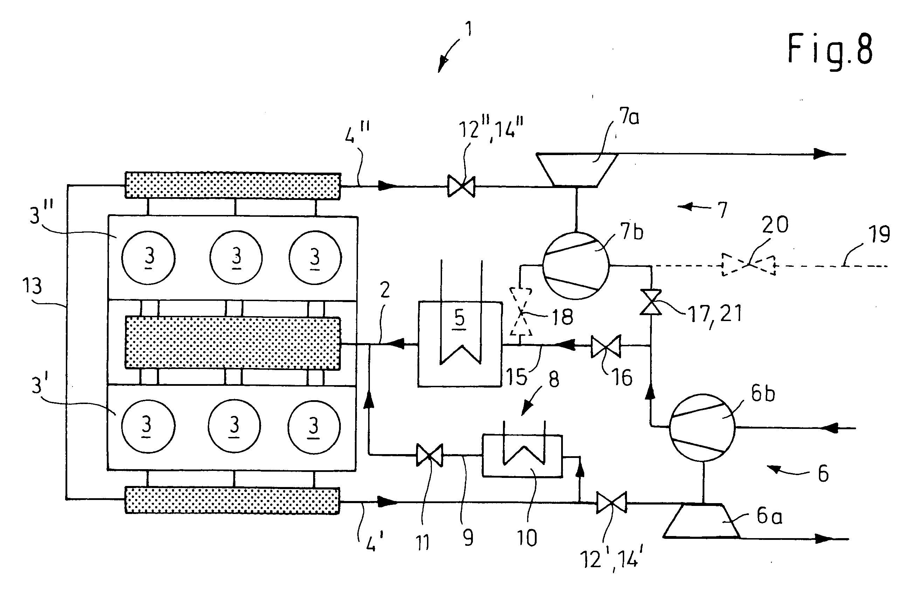

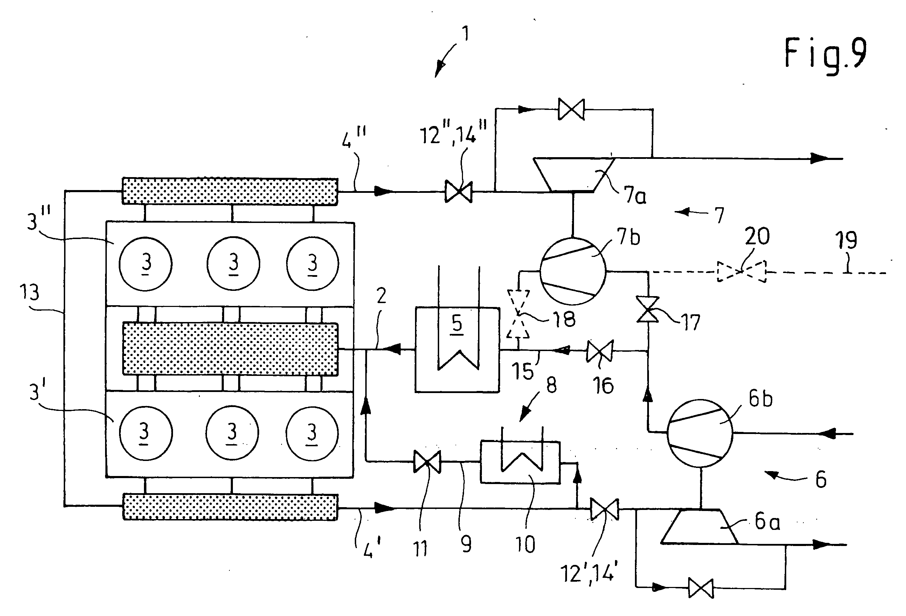

Die Figuren 8 und 9 zeigen schematisch eine achte und eine neunte Ausführungsform der Brennkraftmaschine 1. Die Figur 8 bzw. 9 baut in gleicher Weise auf der Figur 2 bzw. 3 auf wie die Figur 7 auf der Figur 1 aufbaut. Die Ausführungsformen unterscheiden sich durch die Anordnung einer Bypaßleitung 15, einem in dieser Bypaßleitung 15 vorgesehenen Absperrelement 16, sowie den beiden in der Gesamtansaugleitung 2 angeordneten Absperrelementen 17,18. Aus diesem Grund wird Bezug genommen auf die zuvor beschriebene Ausführungsform gemäß Figur 7. Für dieselben Bauteile wurden dieselben Bezugszeichen verwendet.

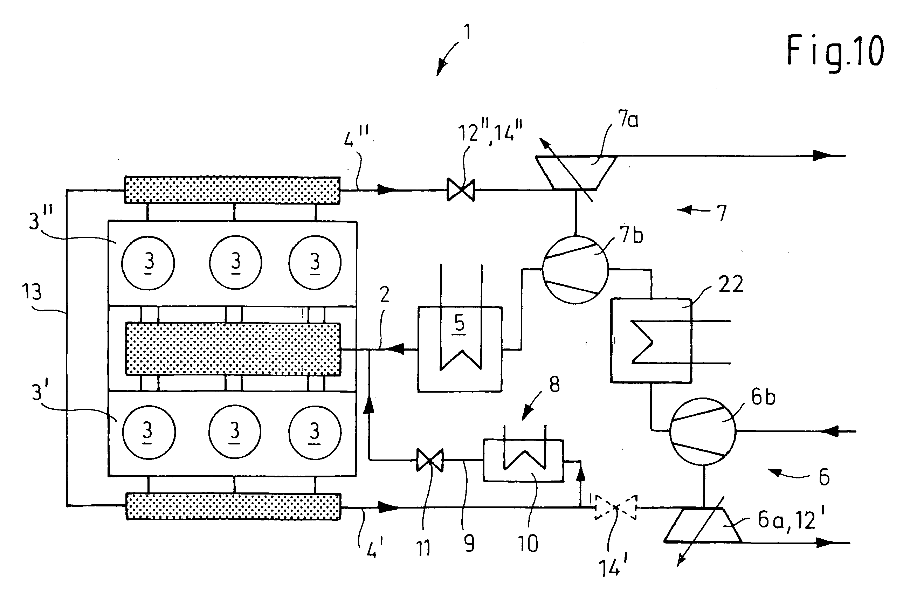

Figur 10 zeigt schematisch eine zehnte Ausführrungsform der aufgeladenen Brennkraftmaschine 1. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform ist bei der in Figur 10 dargestellten Brennkraftmaschine 1 zwischen den Verdichtern 6b,7b ein zweiter Ladeluftkühler 22 in der Gesamtansaugleitung 2 angeordnet ist. Die im ersten Verdichter 6b vorverdichtete Verbrennungsluft, die sich im Rahmen der Vorverdichtung erwärmt, wird auf diese Weise vor Eintritt in den zweiten Verdichter 7b heruntergekühlt, was zu einer verbesserten Zylinderfüllung beiträgt und damit die Qualität der Aufladung weiter verbessert.

Eine derartige Zwischenkühlung 22 der Verbrennungsluft kann bei den Ausführungsformen gemäß den Figuren 2 bis 9 ebenfalls vorgesehen werden.

**Bezugszeichen**

| | |
|---|---|
| 1 | aufgeladene Brennkraftmaschine |
| 2 | Gesamtansaugleitung |
| 3 | Zylinder |
| 3' | erste Zylindergruppe |
| 3" | zweite Zylindergruppe |
| 4' | erste Abgasleitung |
| 4" | zweite Abgasleitung |
| 5 | Ladeluftkühler |
| 6 | erster Abgasturbolader |
| 6a | erste Turbine |
| 6b | erster Verdichter |
| 7 | zweiter Abgasturbolader |
| 7a | zweite Turbine |
| 7b | zweiter Verdichter |
| 8 | Abgasrückführung |
| 9 | Leitung zur Abgasrückführung |
| 10 | Kühler |
| 11 | Absperrelement |
| 12' | Mittel zur Steuerung des Abgasmassenstromes in der ersten Abgasleitung |
| 12" | Mittel zur Steuerung des Abgasmassenstromes in der zweiten Abgasleitung |
| 13 | Verbindungsleitung |
| 14' | Absperrelement |
| 14" | Absperrelement |
| 15 | zweite Bypaßleitung |
| 16 | Absperrelement |
| 17 | Absperrelement |
| 18 | Absperrelement |
| 19 | zusätzliche Leitung |
| 20 | Absperrelement |
| 21 | Absperrelement |
| 22 | Ladeluftkühler, Zwischenkühlung |
| AGR | Abgasrückführung |
| $m_{AGR}$ | Masse an zurückgeführtem Abgas |
| $m_{Frischluft}$ | Masse an zugeführter Frischluft bzw. Verbrennungsluft |
| VTG | variable Turbinengeometrie |
| VVG | variable Verdichtergeometrie |
| $X_{AGR}$ | Abgasrückführrate |

**Patentansprüche**

1. Aufgeladene Brennkraftmaschine (1) mit mindestens zwei Zylindern (3), die in der Art konfiguriert sind, daß sie zwei Gruppen (3',3") mit jeweils mindestens einem Zylinder (3) bilden, wobei beide Zylindergruppen (3',3") jeweils mit einer Abgasleitung (4',4") ausgestattet sind und beide Abgasleitungen (4',4") miteinander in Verbindung (13) stehen, und mit zwei Abgasturboladern (6,7), deren Turbinen (6a,7a) parallel geschaltet sind, indem eine erste Turbine (6a) eines ersten Abgasturboladers (6) in der Abgasleitung (4') der ersten Zylindergruppe (3') angeordnet ist und eine zweite Turbine (7a) eines zweiten Abgasturboladers (7) in der Abgasleitung (4") der zweiten Zylindergruppe (3") angeordnet ist, und deren Verdichter (6b,7b) in Reihe geschaltet sind, indem ein erster Verdichter (6b) des ersten Abgasturboladers (6) in einer Gesamtansaugleitung (2), die zur Versorgung der Brennkraftmaschine (1) mit Frischluft bzw. Frischgemisch dient, angeordnet ist und ein zweiter Verdichter (7b) des zweiten Abgasturboladers (7) stromabwärts des ersten Verdichters (6b) in dieser Gesamtansaugleitung (2) angeordnet ist, und mit einer Abgasrückführung (8), welche eine Leitung (9) umfaßt, die stromaufwärts einer der beiden Turbinen (6a,7a) aus der dieser Turbine (6a,7a) zugeordneten Abgasleitung (4',4") abzweigt und in die Gesamtansaugleitung (2) mündet, wobei sowohl in der ersten Abgasleitung (4') als auch in der zweiten Abgasleitung (4") Mittel (12',12") vorgesehen sind, mit denen die Größe der beiden durch die Turbinen (6a,7a) geführten Abgasmassenströme steuerbar ist,
**dadurch gekennzeichnet, dass**

■ beide Abgasleitungen (4',4") stromaufwärts der Turbinen (6a,7a) in der Art miteinander in Verbindung (13) stehen, dass der gesamte Abgasstrom sowohl vollständig durch die erste Turbine (6a) als auch vollständig durch die zweite Turbine (7a) hindurchführbar ist.

2. Aufgeladene Brennkraftmaschine (1) nach Anspruch 1,
**dadurch gekennzeichnet, daß**
der erste Verdichter (6b) größer ausgelegt ist als der zweite Verdichter (7b).

3. Aufgeladene Brennkraftmaschine (1) nach Anspruch 1 oder 2,
**dadurch gekennzeichnet, daß**
die erste Turbine (6a) größer ausgelegt ist als die zweite Turbine (7a).

4. Aufgeladene Brennkraftmaschine (1) nach einem der vorherigen Ansprüche,
**dadurch gekennzeichnet, daß**
das Mittel (12') zur Steuerung des Abgasmassenstroms in der ersten Abgasleitung (4') und/oder das Mittel (12") zur Steuerung des Abgasmassenstroms in der zweiten Abgasleitung (4") ein Absperrelement (14',14"), vorzugsweise ein Ventil, ist.

**5.** Aufgeladene Brennkraftmaschine (1) nach Anspruch 4,
**dadurch gekennzeichnet, daß**
das Absperrelement (14',14") zur Steuerung des Abgasmassenstroms stromaufwärts der Turbine (6a, 7a) in der Abgasleitung (4',4") angeordnet ist.

**6.** Aufgeladene Brennkraftmaschine (1) nach einem der vorherigen Ansprüche,
**dadurch gekennzeichnet, daß**
die erste Turbine (6a) eine variable Turbinengeometrie aufweist.

**7.** Aufgeladene Brennkraftmaschine (1) nach Anspruch 6,
**dadurch gekennzeichnet, daß**
die erste Turbine (6a) das Mittel (12') zur Steuerung des Abgasmassenstroms in der ersten Abgasleitung (4') bildet, wobei durch Verstellen der Turbine (6a) in Richtung Querschnittsverkleinerung eine Verkleinerung des durch die erste Turbine (6a) geführten Abgasmassenstroms realisierbar ist.

**8.** Aufgeladene Brennkraftmaschine (1) nach einem der Ansprüche 1 bis 5,
**dadurch gekennzeichnet, daß**
die erste Turbine (6a) eine feste, nicht veränderbare Turbinengeometrie aufweist.

**9.** Aufgeladene Brennkraftmaschine (1) nach einem der Ansprüche 1 bis 5,
**dadurch gekennzeichnet, daß**
die erste Turbine (6a) als Waste-Gate-Turbine ausgeführt ist.

**10.** Aufgeladene Brennkraftmaschine (1) nach einem der vorherigen Ansprüche,
**dadurch gekennzeichnet, daß**
der erste Verdichter (6b) eine variable Verdichtergeometrie aufweist.

**11.** Aufgeladene Brennkraftmaschine (1) nach einem der Ansprüche 1 bis 9,
**dadurch gekennzeichnet, daß**
der erste Verdichter (6b) eine feste, nicht veränderbare Verdichtergeometrie aufweist.

**12.** Aufgeladene Brennkraftmaschine (1) nach einem der vorherigen Ansprüche,
**dadurch gekennzeichnet, daß**
der erste Verdichter (6b) mit einer ersten Bypaßleitung ausgestattet ist, die stromabwärts des ersten Verdichters (6b) aus der Gesamtansaugleitung (2) abzweigt.

**13.** Aufgeladene Brennkraftmaschine (1) nach einem der vorherigen Ansprüche,
**dadurch gekennzeichnet, daß**
stromabwärts der Verdichter (6b,7b) ein Ladeluftkühler (5) in der Gesamtansaugleitung (2) angeordnet ist.

**14.** Aufgeladene Brennkraftmaschine (1) nach einem der vorherigen Ansprüche,
**dadurch gekennzeichnet, daß**
zwischen den Verdichtern (6b,7b) ein zweiter Ladeluftkühler (22) in der Gesamtansaugleitung (2) angeordnet ist.

**15.** Aufgeladene Brennkraftmaschine (1) nach Anspruch 13 oder 14,
**dadurch gekennzeichnet, daß**
die Leitung (9) zur Abgasrückführung (8) stromabwärts der Ladeluftkühler (5,22) in die Gesamtansaugleitung (2) mündet.

**16.** Aufgeladene Brennkraftmaschine (1) nach einem der vorherigen Ansprüche,
**dadurch gekennzeichnet, daß**
in der Leitung (9) zur Abgasrückführung (8) ein zusätzlicher Kühler (10) vorgesehen ist.

**17.** Aufgeladene Brennkraftmaschine (1) nach einem der vorherigen Ansprüche,
**dadurch gekennzeichnet, daß**
in der Leitung (9) zur Abgasrückführung (8) ein Absperrelement (11) vorgesehen ist.

**18.** Aufgeladene Brennkraftmaschine (1) nach einem der vorherigen Ansprüche,
**dadurch gekennzeichnet, daß**
die zweite Turbine (7a) eine variable Turbinengeometrie aufweist.

**19.** Aufgeladene Brennkraftmaschine (1) nach Anspruch 18,
**dadurch gekennzeichnet, daß**
die zweite Turbine (7a) das Mittel (12") zur Steuerung des Abgasmassenstroms in der zweiten Abgasleitung (4") bildet, wobei durch Verstellen der Turbine (7a) in Richtung Querschnittsverkleinerung eine Verkleinerung des durch die zweite Turbine (7a) geführten Abgasmassenstroms realisierbar ist.

**20.** Aufgeladene Brennkraftmaschine (1) nach einem der Ansprüche 1 bis 17,
**dadurch gekennzeichnet, daß**
die zweite Turbine (7a) eine feste, nicht veränderbare Turbinengeometrie aufweist.

**21.** Aufgeladene Brennkraftmaschine (1) nach einem der Ansprüche 1 bis 17,
**dadurch gekennzeichnet, daß**
die zweite Turbine (7a) als Waste-Gate-Turbine ausgeführt ist.

**22.** Aufgeladene Brennkraftmaschine (1) nach einem der vorherigen Ansprüche, **dadurch gekennzeichnet, daß** der zweite Verdichter (7b) eine variable Verdichtergeometrie aufweist.

**23.** Aufgeladene Brennkraftmaschine (1) nach einem der Ansprüche 1 bis 21, **dadurch gekennzeichnet, daß** der zweite Verdichter (7b) eine feste, nicht veränderbare Verdichtergeometrie aufweist.

**24.** Aufgeladene Brennkraftmaschine (1) nach einem der vorherigen Ansprüche, **dadurch gekennzeichnet, daß** daß der zweite Verdichter (7b) mit einer zweiten Bypaßleitung (15) ausgestattet ist, die stromabwärts des zweiten Verdichters (7b) aus der Gesamtansaugleitung (2) abzweigt.

**25.** Aufgeladene Brennkraftmaschine (1) nach Anspruch 24, **dadurch gekennzeichnet, daß** daß die zweite Bypaßleitung (15) stromabwärts des ersten Verdichters (6b) bzw. stromaufwärts des zweiten Verdichters (7b) in die Gesamtansaugleitung (2) einmündet.

**26.** Aufgeladene Brennkraftmaschine (1) nach Anspruch 24 oder 25, **dadurch gekennzeichnet, daß** in der zweiten Bypaßleitung (15) ein Absperrelement (16) vorgesehen ist.

**27.** Aufgeladene Brennkraftmaschine (1) nach Anspruch 25 oder 26, **dadurch gekennzeichnet, daß** stromaufwärts des zweiten Verdichters (7b) vor der Einmündung der zweiten Bypaßleitung (15) ein Absperrelement (17) in der Gesamtansaugleitung (2) vorgesehen ist.

**28.** Aufgeladene Brennkraftmaschine (1) nach einem der Ansprüche 24 bis 27, **dadurch gekennzeichnet, daß** stromabwärts des zweiten Verdichters (7b) vor der Abzweigung der zweiten Bypaßleitung (15) ein Absperrelement (18) in der Gesamtansaugleitung (2) vorgesehen ist.

**29.** Aufgeladene Brennkraftmaschine (1) nach einem der vorherigen Ansprüche, **dadurch gekennzeichnet, daß** der zweite Verdichter (7b) mittels einer zusätzlichen Leitung (19) mit der Umgebung verbindbar ist.

**30.** Aufgeladene Brennkraftmaschine (1) nach Anspruch 29, **dadurch gekennzeichnet, daß** in der zusätzlichen Leitung (19) ein Absperrelement (20) vorgesehen ist.

**31.** Aufgeladene Brennkraftmaschine (1) nach Anspruch 29 oder 30, **dadurch gekennzeichnet, daß** zwischen den beiden Verdichtern (6b,7b) ein Absperrelement (21) in der Gesamtansaugleitung (2) vorgesehen ist.

**32.** Verfahren zum Betreiben einer aufgeladenen Brennkraftmaschine (1) nach Anspruch 1, **dadurch gekennzeichnet, daß**

■ die erste Turbine (6a) größer ausgelegt wird als die zweite Turbine (7a),
■ der erste Verdichters (6b) größer ausgelegt wird als der zweite Verdichter (7b), und
■ bei niedrigen Drehzahlen bzw. kleinen Abgasmengen die in der ersten Abgasleitung (4') und in der zweiten Abgasleitung (4") vorgesehenen Mittel (12',12") in der Art gesteuert werden, daß der wesentliche Anteil des Abgases durch die zweite Turbine (7a) geführt wird d.h. der durch die zweite Turbine (7a) geleitete Abgasmassenstrom größer ist als der durch die erste Turbine (6a) geleitete Abgasmassenstrom, und
■ bei hohen Drehzahlen bzw. großen Abgasmengen die in der ersten Abgasleitung (4') und in der zweiten Abgasleitung (4") vorgesehenen Mittel (12',12") in der Art gesteuert werden, daß der wesentliche Anteil des Abgases durch die erste Turbine (6a) geführt wird d.h. der durch die erste Turbine (6a) geleitete Abgasmassenstrom größer ist als der durch die zweite Turbine (7a) geleitete Abgasmassenstrom.

**33.** Verfahren nach Anspruch 32, **dadurch gekennzeichnet, daß** der zweite Verdichter (7b) mit einer zusätzlichen Leitung (19) ausgestattet wird, mit der dieser zweite Verdichter (7b) bei niedrigen Drehzahlen bzw. kleinen Abgasmengen mit der Umgebung verbunden wird, wobei in der zusätzlichen Leitung (19) zum Öffnen und Schließen dieser Leitung (19) ein Absperrelement (20) vorgesehen wird.

**34.** Verfahren nach Anspruch 33, **dadurch gekennzeichnet, daß** zwischen den beiden Verdichtern (6b,7b) ein Absperrelement (21) in der Gesamtansaugleitung (2) vorgesehen wird, das geschlossen wird, wenn der zweite Verdichter (7b) mittels der zusätzlichen Leitung (19) mit der Umgebung verbunden wird.

**35.** Verfahren nach einem der Ansprüche 32 bis 34, **dadurch gekennzeichnet, daß**

der zweite Verdichter (7b) mit einer zweiten Bypaßleitung (15) ausgestattet wird, die stromabwärts des zweiten Verdichters (7b) aus der Gesamtansaugleitung (2) abzweigt und stromabwärts des ersten Verdichters (6b) bzw. stromaufwärts des zweiten Verdichters (7b) in die Gesamtansaugleitung (2) einmündet, wobei in dieser zweiten Bypaßleitung (15) ein Absperrelement (16) vorgesehen wird, das bei hohen Drehzahlen bzw. großen Abgasmengen vollständig geöffnet wird.

36. Verfahren nach Anspruch 35,
**dadurch gekennzeichnet, daß**
stromaufwärts des zweiten Verdichters (7b) vor der Einmündung der zweiten Bypaßleitung (15) ein Absperrelement (17) in der Gesamtansaugleitung (2) vorgesehen wird, das bei hohen Drehzahlen bzw. großen Abgasmengen vollständig geschlossen wird.

37. Verfahren nach Anspruch 35 oder 36,
**dadurch gekennzeichnet, daß**
stromabwärts des zweiten Verdichters (7b) vor der Abzweigung der zweiten Bypaßleitung (15) ein Absperrelement (18) in der Gesamtansaugleitung (2) vorgesehen wird, das bei hohen Drehzahlen bzw. großen Abgasmengen vollständig geschlossen wird.

38. Verfahren nach einem der Ansprüche 32 bis 37,
**dadurch gekennzeichnet, daß**
die erste Turbine (6a) mit einer variablen Turbinengeometrie ausgestattet wird und bei niedrigen Drehzahlen bzw. kleinen Abgasmengen durch Verstellen der variablen Turbinengeometrie der Turbinenquerschnitt der ersten Turbine (6a) reduziert wird.

39. Verfahren nach einem der Ansprüche 32 bis 38,
**dadurch gekennzeichnet, daß**
die zweite Turbine (7a) mit einer variablen Turbinengeometrie ausgestattet wird und bei hohen Drehzahlen bzw. großen Abgasmengen durch Verstellen der variablen Turbinengeometrie der Turbinenquerschnitt der zweiten Turbine (7a) reduziert wird.

40. Verfahren nach einem der Ansprüche 32 bis 39,
**dadurch gekennzeichnet, daß**
als Mittel (12') zur Steuerung des Abgasmassenstroms in der ersten Abgasleitung (4') und/oder als Mittel (12") zur Steuerung des Abgasmassenstroms in der zweiten Abgasleitung (4") ein Absperrelement (14',14"), vorzugsweise ein Ventil, verwendet wird, welches

■ bei niedrigen Drehzahlen bzw. kleinen Abgasmengen in der Art gesteuert werden, daß der wesentliche Anteil des Abgases durch die zweite Turbine (7a) geführt wird d.h. der durch die zweite Turbine (7a) geleitete Abgasmassenstrom größer ist als der durch die erste Turbine (6a) geleitete Abgasmassenstrom, und
■ bei hohen Drehzahlen bzw. großen Abgasmengen in der Art gesteuert werden, daß der wesentliche Anteil des Abgases durch die erste Turbine (6a) geführt wird d.h. der durch die erste Turbine (6a) geleitete Abgasmassenstrom größer ist als der durch die zweite Turbine (7a) geleitete Abgasmassenstrom.

**Claims**

1. Supercharged internal combustion engine (1) having at least two cylinders (3), which are configured in such a way that they form two groups (3', 3'') of in each case at least one cylinder (3), both cylinder groups (3', 3'') in each case being equipped with an exhaust pipe (4', 4''), and the two exhaust pipes (4', 4'') being in communication (13) with one another, and having two exhaust gas turbochargers (6, 7), the turbines (6a, 7a) of which are connected in parallel by virtue of a first turbine (6a) of a first exhaust gas turbocharger (6) being arranged in the exhaust pipe (4') of the first cylinder group (3') and a second turbine (7a) of a second exhaust gas turbocharger (7) being arranged in the exhaust pipe (4'') of the second cylinder group (3''), with their compressors (6b, 7b) connected in series, by virtue of a first compressor (6b) of the first exhaust gas turbocharger (6) being arranged in a common intake line (2), which is used to supply the internal combustion engine (1) with fresh air or fresh mix, and a second compressor (7b) of the second exhaust gas turbocharger (7) being arranged downstream of the first compressor (6b) in this common intake line (2), and having an exhaust gas recirculation (8) which comprises a line (9) which upstream of one of the two turbines (6a, 7a) branches off from the exhaust pipe (4', 4'') assigned to this turbine (6a, 7a) and opens out into the common intake line (2), wherein means (12', 12'') which can be used to control the level of the two exhaust gas mass flows passed through the turbines (6a, 7a) are provided both in the first exhaust pipe (4') and in the second exhaust pipe (4"), **characterized in that**

■ the two exhaust pipes (4', 4'') upstream of the turbines (6a, 7a) are in communication (13) with one another in such a manner that the entire exhaust gas flow can be passed both completely through the first turbine (6a) and completely through the second turbine (7a).

2. Supercharged internal combustion engine (1) according to Claim 1, **characterized in that** the first compressor (6b) is designed to be larger than the second compressor (7b).

3. Supercharged internal combustion engine (1) according to Claim 1 or 2, **characterized in that** the first turbine (6a) is designed to be larger than the second turbine (7a).

4. Supercharged internal combustion engine (1) according to one of the preceding claims, **characterized in that** the means (12') for controlling the exhaust gas mass flow in the first exhaust pipe (4') and/or the means (12") for controlling the exhaust gas mass flow in the second exhaust pipe (4") is a shut-off element (14', 14"), preferably a valve.

5. Supercharged internal combustion engine (1) according to Claim 4, **characterized in that** the shut-off element (14', 14") for controlling the exhaust gas mass flow is arranged in the exhaust pipe (4', 4") upstream of the turbine (6a, 7a).

6. Supercharged internal combustion engine (1) according to one of the preceding claims, **characterized in that** the first turbine (6a) has a variable turbine geometry.

7. Supercharged internal combustion engine (1) according to Claim 6, **characterized in that** the first turbine (6a) forms the means (12') for controlling the exhaust gas mass flow in the first exhaust pipe (4'), it being possible to reduce the exhaust gas mass flow passed through the first turbine (6a) by adjusting the turbine (6a) in the direction of a reduction in cross section.

8. Supercharged internal combustion engine (1) according to one of Claims 1 to 5, **characterized in that** the first turbine (6a) has a fixed, invariable turbine geometry.

9. Supercharged internal combustion engine (1) according to one of Claims 1 to 5, **characterized in that** the first turbine (6a) is designed as a waste gate turbine.

10. Supercharged internal combustion engine (1) according to one of the preceding claims, **characterized in that** the first compressor (6b) has a variable compressor geometry.

11. Supercharged internal combustion engine (1) according to one of Claims 1 to 9, **characterized in that** the first compressor (6b) has a fixed, invariable compressor geometry.

12. Supercharged internal combustion engine (1) according to one of the preceding claims, **characterized in that** the first compressor (6b) is equipped with a first bypass line which branches off from the common intake line (2) downstream of the first compressor (6b) .

13. Supercharged internal combustion engine (1) according to one of the preceding claims, **characterized in that** a charge-air cooler (5) is arranged in the common intake line (2) downstream of the compressor (6b, 7b).

14. Supercharged internal combustion engine (1) according to one of the preceding claims, **characterized in that** a second charge-air cooler (22) is arranged in the common intake line (2) between the compressors (6b, 7b).

15. Supercharged internal combustion engine (1) according to Claim 13 or 14, **characterized in that** the line (9) for exhaust gas recirculation (8) opens out into the common intake line (2) downstream of the charge-air coolers (5, 22).

16. Supercharged internal combustion engine (1) according to one of the preceding claims, **characterized in that** an additional cooler (10) is provided in the line (9) for exhaust gas recirculation (8).

17. Supercharged internal combustion engine (1) according to one of the preceding claims, **characterized in that** a shut-off element (11) is provided in the line (9) for exhaust gas recirculation (8).

18. Supercharged internal combustion engine (1) according to one of the preceding claims, **characterized in that** the second turbine (7a) has a variable turbine geometry.

19. Supercharged internal combustion engine (1) according to Claim 18, **characterized in that** the second turbine (7a) forms the means (12'') for controlling the exhaust gas mass flow in the second exhaust pipe (4''), it being possible to reduce the exhaust gas mass flow passed through the second turbine (7a) by adjusting the turbine (7a) in the direction of a reduction in cross section.

20. Supercharged internal combustion engine (1) according to one of Claims 1 to 17, **characterized in that** the second turbine (7a) has a fixed, invariable turbine geometry.

21. Supercharged internal combustion engine (1) according to one of Claims 1 to 17, **characterized in that** the second turbine (7a) is designed as a waste gate turbine.

22. Supercharged internal combustion engine (1) according to one of the preceding claims, **character-**

**ized in that** the second compressor (7b) has a variable compressor geometry.

23. Supercharged internal combustion engine (1) according to one of Claims 1 to 21, **characterized in that** the second compressor (7b) has a fixed, invariable compressor geometry.

24. Supercharged internal combustion engine (1) according to one of the preceding claims, **characterized in that** the second compressor (7b) is equipped with a second bypass line (15) which branches off from the common intake line (2) downstream of the second compressor (7b).

25. Supercharged internal combustion engine (1) according to Claim 24, **characterized in that** the second bypass line (15) opens out into the common intake line (2) downstream of the first compressor (6b) or upstream of the second compressor (7b).

26. Supercharged internal combustion engine (1) according to Claim 24 or 25, **characterized in that** a shut-off element (16) is provided in the second bypass line (15).

27. Supercharged internal combustion engine (1) according to Claim 25 or 26, **characterized in that** a shut-off element (17) is provided in the common intake line (2) upstream of the second compressor (7b) before the point where the second bypass line (15) opens out.

28. Supercharged internal combustion engine (1) according to one of Claims 24 to 27, **characterized in that** a shut-off element (18) is provided in the common intake line (2) downstream of the second compressor (7b) and before the point where the second bypass line (15) branches off.

29. Supercharged internal combustion engine (1) according to one of the preceding claims, **characterized in that** the second compressor (7b) can be connected to atmosphere by means of an additional line (19).

30. Supercharged internal combustion engine (1) according to Claim 29, **characterized in that** a shut-off element (20) is provided in the additional line (19).

31. Supercharged internal combustion engine (1) according to Claim 29 or 30, **characterized in that** a shut-off element (21) is provided in the common intake line (2) between the two compressors (6b, 7b).

32. Method for operating a supercharged internal combustion engine (1) according to Claim 1, **characterized in that**

- ■ the first turbine (6a) is designed to be larger than the second turbine (7a),
- ■ the first compressor (6b) is designed to be larger than the second compressor (7b), and
- ■ at low engine speeds or with small quantities of exhaust gas, the means (12', 12'') provided in the first exhaust pipe (4') and in the second exhaust pipe (4'') are controlled in such a manner that the main part of the exhaust gas is passed through the second turbine (7a), i.e. the exhaust gas mass flow passed through the second turbine (7a) is greater than the exhaust gas mass flow passed through the first turbine (6a), and
- ■ at high engine speeds or with large quantities of exhaust gas, the means (12', 12'') provided in the first exhaust pipe (4') and in the second exhaust pipe (4'') are controlled in such a way that the main part of the exhaust gas is passed through the first turbine (6a), i.e. the exhaust gas mass flow passed through the first turbine (6a) is greater than the exhaust gas mass flow passed through the second turbine (7a).

33. Method according to Claim 32, **characterized in that** the second compressor (7b) is equipped with an additional line (19), by which this second compressor (7b) is connected to atmosphere at low engine speeds or with small quantities of exhaust gas, a shut-off element (20) being provided in the additional line (19) for opening and closing this line (19).

34. Method according to Claim 33, **characterized in that** a shut-off element (21) is provided in the common intake line (2) between the two compressors (6b, 7b), which shut-off element (21) is closed when the second compressor (7b) is connected to atmosphere by means of the additional line (19).

35. Method according to one of Claims 32 to 34, **characterized in that** the second compressor (7b) is equipped with a second bypass line (15), which branches off from the common intake line (2) downstream of the second compressor (7b) and opens out into the common intake line (2) downstream of the first compressor (6b) and upstream of the second compressor (7b), a shut-off element (16), which is fully open at high engine speeds or with large quantities of exhaust gas, being provided in this second bypass line (15).

36. Method according to Claim 35, **characterized in that** a shut-off element (17), which is fully closed at high engine speeds or with large quantities of exhaust gas, is provided in the common intake line (2) upstream of the second compressor (7b) before the point where the second bypass line (15) opens out.

**37.** Method according to Claim 35 or 36, **characterized in that** a shut-off element (18), which is fully closed at high engine speeds or with large quantities of exhaust gas, is provided in the common intake line (2) downstream of the second compressor (7b) before the point where the second bypass line (15) branches off.

**38.** Method according to one of Claims 32 to 37, **characterized in that** the first turbine (6a) is equipped with a variable turbine geometry and the turbine cross section of the first turbine (6a) is reduced at low engine speeds or with small quantities of exhaust gas by adjusting the variable turbine geometry.

**39.** Method according to one of Claims 32 to 38, **characterized in that** the second turbine (7a) is equipped with a variable turbine geometry, and the turbine cross section of the second turbine (7a) is reduced at high engine speeds or with large quantities of exhaust gas by adjusting the variable turbine geometry.

**40.** Method according to one of Claims 32 to 39, **characterized in that** a shut-off element (14', 14''), preferably a valve, which

■ at low engine speeds or with small quantities of exhaust gas is controlled in such a manner that the main part of the exhaust gas is passed through the second turbine (7a), i.e. the exhaust gas mass flow passed through the second turbine (7a) is greater than the exhaust gas mass flow passed through the first turbine (6a), and
■ at high engine speeds or with large quantities of exhaust gas is controlled in such a manner that the main part of the exhaust gas is passed through the first turbine (6a), i.e. the exhaust gas mass flow passed through the first turbine (6a) is greater than the exhaust gas mass flow passed through the second turbine (7a),

is used as means (12') for controlling the exhaust gas mass flow in the first exhaust pipe (4') and/or as means (12'') for controlling the exhaust gas mass flow in the second exhaust pipe (4'') .

**Revendications**

**1.** Moteur à combustion interne à suralimentation (1), comprenant au moins deux cylindres (3), qui sont configurés de telle sorte qu'ils forment deux groupes (3', 3'') comprenant chacun au moins un cylindre (3), les deux groupes de cylindres (3', 3'') étant à chaque fois munis d'une conduite de gaz d'échappement (4', 4'') et les deux conduites de gaz d'échappement (4', 4'') étant connectées (13) l'une à l'autre, et comprenant deux turbosoufflantes à gaz d'échappement (6, 7), dont les turbines (6a, 7a) sont montées en parallèle, une première turbine (6a) d'une première turbosoufflante à gaz d'échappement (6) étant disposée dans la conduite de gaz d'échappement (4') du premier groupe de cylindres (3') et une deuxième turbine (7a) d'une deuxième turbosoufflante à gaz d'échappement (7) étant disposée dans la conduite de gaz d'échappement (4'') du deuxième groupe de cylindres (3''), et leurs compresseurs (6b, 7b) étant montés en série, un premier compresseur (6b) de la première turbosoufflante à gaz d'échappement (6) étant disposé dans une conduite d'aspiration globale (2) qui sert à alimenter le moteur à combustion interne (1) en air frais ou en mélange frais, et un deuxième compresseur (7b) de la deuxième turbosoufflante à gaz d'échappement (7) étant disposé en aval du premier compresseur (6b) dans cette conduite d'aspiration globale (2), et comprenant une recirculation de gaz d'échappement (8), qui comprend une conduite (9) qui part en amont de l'une des deux turbines (6a, 7a) depuis la conduite de gaz d'échappement (4', 4'') associée à cette turbine (6a, 7a), et qui débouche dans la conduite d'aspiration globale (2), des moyens (12', 12'') étant prévus à la fois dans la première conduite de gaz d'échappement (4') et dans la deuxième conduite de gaz d'échappement (4''), avec lesquels on peut réguler le volume des deux débits massiques de gaz d'échappement guidés à travers les turbines (6a, 7a),
**caractérisé en ce que**
les deux conduites de gaz d'échappement (4',4'') sont connectées (13) l'une à l'autre en amont des turbines (6a, 7a) de telle sorte que le flux de gaz d'échappement total puisse traverser complètement la première turbine (6a) et aussi complètement la deuxième turbine (7a).

**2.** Moteur à combustion interne à suralimentation (1) selon la revendication 1,
**caractérisé en ce que**
le premier compresseur (6b) est plus grand que le deuxième compresseur (7b).

**3.** Moteur à combustion interne à suralimentation (1) selon la revendication 1 ou 2,
**caractérisé en ce que**
la première turbine (6a) est plus grande que la deuxième turbine (7a).

**4.** Moteur à combustion interne à suralimentation (1) selon l'une quelconque des revendications précédentes,
**caractérisé en ce que**
le moyen (12') pour réguler le débit massique de gaz d'échappement dans la première conduite de gaz d'échappement (4') et/ou le moyen (12'') pour réguler le débit massique de gaz d'échappement dans la deuxième conduite de gaz d'échappement (4'') est un élément de blocage (14', 14''), de préférence une soupape.

5. Moteur à combustion interne à suralimentation (1) selon la revendication 4,
**caractérisé en ce que**
l'élément de blocage (14', 14'') pour la régulation du débit massique de gaz d'échappement est disposé en amont de la turbine (6a, 7a) dans la conduite de gaz d'échappement (4', 4'').

6. Moteur à combustion interne à suralimentation (1) selon l'une quelconque des revendications précédentes,
**caractérisé en ce que**
la première turbine (6a) présente une géométrie de turbine variable.

7. Moteur à combustion interne à suralimentation (1) selon la revendication 6,
**caractérisé en ce que**
la première turbine (6a) constitue le moyen (12') pour réguler le débit massique de gaz d'échappement dans la première conduite de gaz d'échappement (4'), le réglage de la turbine (6a) dans le sens d'une réduction de la section transversale pouvant réaliser une réduction du débit massique de gaz d'échappement guidé à travers la première turbine (6a).

8. Moteur à combustion interne à suralimentation (1) selon l'une quelconque des revendications 1 à 5,
**caractérisé en ce que**
la première turbine (6a) présente une géométrie de turbine fixe non variable.

9. Moteur à combustion interne à suralimentation (1) selon l'une quelconque des revendications 1 à 5,
**caractérisé en ce que**
la première turbine (6a) est réalisée sous la forme d'une turbine wastegate.

10. Moteur à combustion interne à suralimentation (1) selon l'une quelconque des revendications précédentes,
**caractérisé en ce que**
le premier compresseur (6b) présente une géométrie de compresseur variable.

11. Moteur à combustion interne à suralimentation (1) selon l'une quelconque des revendications 1 à 9,
**caractérisé en ce que**
le premier compresseur (6b) présente une géométrie de compresseur fixe non variable.

12. Moteur à combustion interne à suralimentation (1) selon l'une quelconque des revendications précédentes,
**caractérisé en ce que**

le premier compresseur (6b) est équipé d'une première conduite de dérivation, qui part en aval du premier compresseur (6b) hors de la conduite d'aspiration globale (2).

13. Moteur à combustion interne à suralimentation (1) selon l'une quelconque des revendications précédentes,
**caractérisé en ce que**
l'on dispose en aval des compresseurs (6b, 7b) un refroidisseur d'air de suralimentation (5) dans la conduite d'aspiration globale (2).

14. Moteur à combustion interne à suralimentation (1) selon l'une quelconque des revendications précédentes,
**caractérisé en ce que**
l'on dispose entre les compresseurs (6b, 7b) un deuxième refroidisseur d'air de suralimentation (22) dans la conduite d'aspiration globale (2).

15. Moteur à combustion interne à suralimentation (1) selon la revendication 13 ou 14,
**caractérisé en ce que**
la conduite (9) pour la recirculation de gaz d'échappement (8) débouche en aval des refroidisseurs d'air de suralimentation (5, 22) dans la conduite d'aspiration globale (2).

16. Moteur à combustion interne à suralimentation (1) selon l'une quelconque des revendications précédentes,
**caractérisé en ce que**
l'on prévoit dans la conduite (9) pour la recirculation de gaz d'échappement (8) un refroidisseur supplémentaire (10).

17. Moteur à combustion interne à suralimentation (1) selon l'une quelconque des revendications précédentes,
**caractérisé en ce que**
l'on prévoit dans la conduite (9) pour la recirculation de gaz d'échappement (8) un élément de blocage (11).

18. Moteur à combustion interne à suralimentation (1) selon l'une quelconque des revendications précédentes,
**caractérisé en ce que**
la deuxième turbine (7a) présente une géométrie de turbine variable.

19. Moteur à combustion interne à suralimentation (1) selon la revendication 18,
**caractérisé en ce que**
la deuxième turbine (7a) constitue le moyen (12'') pour réguler le débit massique de gaz d'échappement dans la deuxième conduite de gaz d'échappement (4''), le réglage de la turbine (7a) dans le sens d'une réduction de la section transversale pouvant réaliser une réduction du débit massique de gaz d'échappement guidé à travers la deuxième turbine (7a).

**20.** Moteur à combustion interne à suralimentation (1) selon l'une quelconque des revendications 1 à 17, **caractérisé en ce que**
la deuxième turbine (7a) présente une géométrie de turbine fixe, non variable.

**21.** Moteur à combustion interne à suralimentation (1) selon l'une quelconque des revendications 1 à 17, **caractérisé en ce que**
la deuxième turbine (7a) est réalisée sous la forme de turbine wastegate.

**22.** Moteur à combustion interne à suralimentation (1) selon l'une quelconque des revendications précédentes,
**caractérisé en ce que**
le deuxième compresseur (7b) présente une géométrie de compresseur variable.

**23.** Moteur à combustion interne à suralimentation (1) selon l'une quelconque des revendications 1 à 21, **caractérisé en ce que**
le deuxième compresseur (7b) présente une géométrie de compresseur fixe, non variable.

**24.** Moteur à combustion interne à suralimentation (1) selon l'une quelconque des revendications précédentes,
**caractérisé en ce que**
le deuxième compresseur (7b) est muni d'une deuxième conduite de dérivation (15), qui part en aval du deuxième compresseur (7b) hors de la conduite d'aspiration globale (2).

**25.** Moteur à combustion interne à suralimentation (1) selon la revendication 24,
**caractérisé en ce que**
la deuxième conduite de dérivation (15) débouche en aval du premier compresseur (6b) ou en amont du deuxième compresseur (7b) dans la conduite d'aspiration globale (2).

**26.** Moteur à combustion interne à suralimentation (1) selon la revendication 24 ou 25,
**caractérisé en ce que**
l'on prévoit un élément de blocage (16) dans la deuxième conduite de dérivation (15).

**27.** Moteur à combustion interne à suralimentation (1) selon la revendication 25 ou 26,
**caractérisé en ce que**
l'on prévoit en amont du deuxième compresseur (7b), avant l'embouchure de la deuxième conduite de dérivation (15), un élément de blocage (17) dans la conduite d'aspiration globale (2).

**28.** Moteur à combustion interne à suralimentation (1) selon l'une quelconque des revendications 24 à 27, **caractérisé en ce que**
l'on prévoit en aval du deuxième compresseur (7b), avant la dérivation de la deuxième conduite de dérivation (15), un élément de blocage (18) dans la conduite d'aspiration globale (2).

**29.** Moteur à combustion interne à suralimentation (1) selon l'une quelconque des revendications précédentes,
**caractérisé en ce que**
le deuxième compresseur (7b) peut être connecté à l'environnement au moyen d'une conduite supplémentaire (19).

**30.** Moteur à combustion interne à suralimentation (1) selon la revendication 29,
**caractérisé en ce que**
l'on prévoit un élément de blocage (20) dans la conduite supplémentaire (19).

**31.** Moteur à combustion interne à suralimentation (1) selon la revendication 29 ou 30,
**caractérisé en ce que**
l'on prévoit entre les deux compresseurs (6b, 7b) un élément de blocage (21) dans la conduite d'aspiration globale (2).

**32.** Procédé pour faire fonctionner un moteur à combustion interne (1) selon la revendication 1,
**caractérisé en ce que**

- la première turbine (6a) est conçue plus grande que la deuxième turbine (7a),
- le premier compresseur (6b) est conçu plus grand que le deuxième compresseur (7b), et
- à faibles régimes, ou pour de petites quantités de gaz d'échappement, les moyens (12', 12'') prévus dans la première conduite de gaz d'échappement (4') et dans la deuxième conduite de gaz d'échappement (4'') sont régulés de telle sorte que la majeure partie du gaz d'échappement soit guidée à travers la deuxième turbine (7a), c'est-à-dire que le débit massique de gaz d'échappement conduit à travers la deuxième turbine (7a) soit plus grand que le débit massique de gaz d'échappement conduit à travers la première turbine (6a), et
- à grands régimes, ou pour de grandes quantités de gaz d'échappement, les moyens (12', 12'') prévus dans la première conduite de gaz d'échappement (4') et dans la deuxième conduite de gaz d'échappement (4'') sont régulés de telle sorte que la majeure partie du gaz d'échappement soit guidée à travers la première turbine (6a), c'est-à-dire que le débit massique de gaz d'échappement conduit à travers la première turbine (6a) soit plus grand que le débit massique de gaz d'échappement conduit à travers la deuxième turbine (7a).

**33.** Procédé selon la revendication 32,
**caractérisé en ce que**
le deuxième compresseur (7b) est muni d'une conduite supplémentaire (19), avec laquelle ce deuxième compresseur (7b) est connecté à l'environnement à faibles régimes ou pour de petites quantités de gaz d'échappement, un élément de blocage (20) étant prévu dans la conduite supplémentaire (19) pour ouvrir et fermer cette conduite (19).

**34.** Procédé selon la revendication 33,
**caractérisé en ce que**
l'on prévoit entre les deux compresseurs (6b, 7b) un élément de blocage (21) dans la conduite d'aspiration globale (2), lequel est fermé lorsque le deuxième compresseur (7b) est connecté à l'environnement au moyen de la conduite supplémentaire (19).

**35.** Procédé selon l'une quelconque des revendications 32 à 34,
**caractérisé en ce que**
le deuxième compresseur (7b) est muni d'une deuxième conduite de dérivation (15), qui part en aval du deuxième compresseur (7b) hors de la conduite d'aspiration globale (2) et qui débouche en aval du premier compresseur (6b) ou en amont du deuxième compresseur (7b) dans la conduite d'aspiration globale (2), un élément de blocage (16) étant prévu dans cette deuxième conduite de dérivation (15), lequel est complètement ouvert à grands régimes ou pour de grandes quantités de gaz d'échappement.

**36.** Procédé selon la revendication 35,
**caractérisé en ce que**
l'on prévoit en amont du deuxième compresseur (7b) avant l'embouchure de la deuxième conduite de dérivation (15), un élément de blocage (17) dans la conduite d'aspiration globale (2), lequel est complètement fermé à grands régimes ou pour de grandes quantités de gaz d'échappement.

**37.** Procédé selon la revendication 35 ou 36,
**caractérisé en ce que**
l'on prévoit en aval du deuxième compresseur (7b) avant la ramification de la deuxième conduite de dérivation (15), un élément de blocage (18) dans la conduite d'aspiration globale (2), lequel est complètement fermé à grands régimes ou pour de grandes quantités de gaz d'échappement.

**38.** Procédé selon l'une quelconque des revendications 32 à 37,
**caractérisé en ce que**
la première turbine (6a) est munie d'une géométrie de turbine variable et la section transversale de turbine de la première turbine (6a) est réduite à faibles régimes ou pour de petites quantités de gaz d'échappement, par réglage de la géométrie variable de la turbine.

**39.** Procédé selon l'une quelconque des revendications 32 à 38,
**caractérisé en ce que**
la deuxième turbine (7a) est munie d'une géométrie de turbine variable et la section transversale de turbine de la deuxième turbine (7a) est réduite à grands régimes ou pour de grandes quantités de gaz d'échappement, par réglage de la géométrie variable de la turbine.

**40.** Procédé selon l'une quelconque des revendications 32 à 39,
**caractérisé en ce que**
l'on utilise comme moyen (12') pour réguler le débit massique de gaz d'échappement dans la première conduite de gaz d'échappement (4') et/ou comme moyen (12'') pour réguler le débit massique de gaz d'échappement dans la deuxième conduite de gaz d'échappement (4'') un élément de blocage (14', 14''), de préférence une soupape, qui :

- à faibles régimes ou pour de petites quantités de gaz d'échappement, est régulé de telle sorte que la majeure partie du gaz d'échappement soit conduite à travers la deuxième turbine (7a), c'est-à-dire que le débit massique de gaz d'échappement conduit à travers la deuxième turbine (7a) soit plus grand que le débit massique de gaz d'échappement conduit à travers la première turbine (6a), et
- à grands régimes ou pour de grandes quantités de gaz d'échappement, est régulé de telle sorte que la majeure partie du gaz d'échappement soit conduite à travers la première turbine (6a), c'est-à-dire que le débit massique de gaz d'échappement conduit à travers la première turbine (6a) soit plus grand que le débit massique de gaz d'échappement conduit à travers la deuxième turbine (7a).

Fig.1

EP 1 640 597 B1

Fig.2

EP 1 640 597 B1

Fig.3

EP 1 640 597 B1

Fig.4

Fig.5

EP 1 640 597 B1

Fig.6

Fig.7

EP 1 640 597 B1

Fig.8

EP 1 640 597 B1

Fig.9

EP 1 640 597 B1

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6360732 B